(19) Europäisches Patentamt
European Patent Office
Office européen des brevets

(11) **EP 2 940 922 B1**

(12) **FASCICULE DE BREVET EUROPEEN**

(45) Date de publication et mention
de la délivrance du brevet:
**16.10.2019 Bulletin 2019/42**

(51) Int Cl.:
**H04L 9/30** (2006.01)

(21) Numéro de dépôt: **14075026.6**

(22) Date de dépôt: **29.04.2014**

(54) **Cryptosystèmes symétriques avec clé publique basé sur l'utilisation du groupe symétrique**

Symmetrische Kryptosysteme mit öffentlichem Schlüssel basierende auf dem Symmetrisches Gruppe

Symmetric cryptosystems with public key based on the symmetric group

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**04.11.2015 Bulletin 2015/45**

(73) Titulaire: **Pernel, Arnaud**
**77170 Brie Comte Robert (FR)**

(72) Inventeur: **Pernel, Arnaud**
**77170 Brie Comte Robert (FR)**

(56) Documents cités:
**US-A1- 2007 136 211**

- **IAN MOLLOY ET AL: "Dynamic Virtual Credit Card Numbers", 12 février 2007 (2007-02-12), FINANCIAL CRYPTOGRAPHY AND DATA SECURITY; [LECTURE NOTES IN COMPUTER SCIENCE], SPRINGER BERLIN HEIDELBERG, BERLIN, HEIDELBERG, PAGE(S) 208 - 223, XP019136995, ISBN: 978-3-540-77365-8 * alinéa [0003] - alinéa [0004] ***

- **Gérard Rauch: "Les groupes finis et leurs représentation, Chapitre 3: Les théorèmes de Sylow; le groupe symétrique" In: "Les groupes finis et leurs représentation, Chapitre 3: Les théorèmes de Sylow; le groupe symétrique", 1 janvier 2000 (2000-01-01), XP055140577, ISBN: 978-2-72-980180-9 pages 25-38, * alinéa [03.3] ***
- **Jean-Etienne Rombaldi: "Propriété 2.2.3 L'ordre d'un k1 ... kr-cycle est égal au ppcm des ordres des cycles composant ce k1 ... kr-cycle.", , 9 janvier 2012 (2012-01-09), XP055154081, Extrait de l'Internet: URL:http://www-fourier.ujf-grenoble.fr/~ro mbaldi/AgregInterne/Oral1/102.pdf [extrait le 2014-11-19]**
- **Joseph A Gallian: "The mathematics of identification numbers", , 1 janvier 1991 (1991-01-01), XP055139943, Extrait de l'Internet: URL:http://www.d.umn.edu/~jgallian/ident.p df [extrait le 2014-09-12]**
- **JACOB ALPERIN-SHERIFF ET AL: "Faster Bootstrapping with Polynomial Error", INTERNATIONAL ASSOCIATION FOR CRYPTOLOGIC RESEARCH,, vol. 20140210:134503, 9 February 2014 (2014-02-09), pages 1-17, XP061015490, [retrieved on 2014-02-09]**

**Description**

**A -Domaine technique de l'invention.**

Le domaine technique de la présente invention est celui des procédés de cryptographie . Plus spécifiquement ces procédés sont les procédés de chiffrement à clé secrète (cryptosystèmes symétriques). Dans le détail les procédés cryptographique objets de l'invention concernent des procédés de chiffrement d'un message ou d'une donnée à l'aide d'une clé secrète ainsi que l'authentification .L'invention consiste en un dispositif qui utilisé dans ces différents systèmes cryptographiques symétriques permet que la clé secrète de chiffrement soit modifiable de manière publique pour chaque message chiffré ou , dans le cas de l'authentification , que la personne vérificatrice de l'identité d'une autre par un procédé de cryptographie symétrique , lors par exemple d'un protocole d'authentification par défi-réponse , n'ait pas à détenir la clé secrète de celle-ci .Selon un autre mode d'utilisation du dispositif l'invention est un procédé de chiffrement symétrique dans lequel la clé de chiffrement est un « carré latin » : système de chiffrement symétrique associé à un carré latin donné L .

**B-Technique antérieure**

Les procédés de chiffrement symétrique ayant vocation à utiliser et intégrer le dispositif en question sont ceux qui utilisent comme clé secrète une suite aléatoire de symboles ou une permutation des symboles d'un ensemble E donné . Un exemple est la cas du masque de Vernam . Un message est donné sous forme de lettres de l'alphabet, la clé est aussi une suite de lettres aléatoires de même longueur que le message. Le chiffrement s'opère en additionnant modulo 26 les numéros d'ordre des lettres de l'alphabet : par exemple si la lettre en clair est H , de rang 7 , et clé W de rang 22 , le chiffre est alors la lettre de rang 22 + 7 = 29 modulo 26 , soit 3 , donc la lettre D.Un autre exemple , variante du masque de Vernam , est le chiffre XOR : un message M est donné sous forme de suite de bits, la clé K est une suite de bits aléatoire de même longueur que le message , le chiffrement s'opère en additionnant bit à bit selon la fonction XOR les bits de M et K.Pour ce qui est des clés sous forme de permutation des symboles d'un ensemble E donné on peut citer le chiffrement en mode ECB (Electronic Cipher Book) qui permute un message de n bits par une permutation des n premiers entiers , cette permutation constituant la clé K : par exemple si K = (4 5 3 1 2), permutation de E = {1,2,3,4,5}, et M = 10101, alors le chiffre C de M est C = 01110 (en première position dans C le bit de rang 4 de M , en seconde le bit de rang 5 de M , etc).Le dispositif objet de l'invention concerne donc spécifiquement des procédés symétriques de chiffrement qui reposent sur ce type de clés .Les cryptosystèmes qui ont été cités ci-dessus sont les plus simples mais le dispositif objet de l'invention peut être intégré à des systèmes plus complexes. **On peut noter aussi en technique existante utilisant des permutations de n premiers entiers certains procédés de chiffrement homomorphes , voir par exemple :** JACOB ALPERIN -SHERIFFF ET AL, « Faster Bootstrapping with Polynomial Error », INTERNATIONAL ASSOCIATION FOR CRYPTOLOGIC RESEARCH , Vol 20140210:134503 , 9 février 2014 (2014-02-09), pages 1-17, XP061015490**.**

De la connaissance générale de la personne de l'art est connu le document: Le document XP055140577: intitulé "Les groupes finis et leurs représentation, Chapitre 3: Les théorèmes de Sylow; le groupe symétrique" ISBN 978-2-7298-0180-9 ; ISBN 729801804 Décrit les groupes finis non nécessairement abéliens. L'existence dans tout groupe fini G d'un sous-groupe d'ordre pr, p premier, pour tout diviseur pr, r E N, de l'ordre du groupe G est une réciproque partielle au théorème de LAGRANGE. Nous verrons plus loin que, parmi ces sous-groupes, ceux d'ordre maximal (et qui portent le nom de sous-groupes de p-SYLOw) jouent un rôle important dans la recherche et l'étude des représentations du groupe G. Ce document rappelle les propriétés fondamentales du groupe symétrique.

En cryptographie financière il est connu les documents

US2007136211 qui décrit Une carte de paiement comprend un générateur de valeur de vérification dynamique de carte (CVV) interne et un écran utilisateur pour les transactions sans carte. Les transactions en présence de carte avec des lecteurs de carte de commerçant sont activées par un réseau magnétique dynamique associé en interne à la bande magnétique de la carte. L'affichage et une minuterie sont déclenchés par l'utilisateur lorsque celui-ci doit voir la valeur de vérification de la carte et / ou commencer une nouvelle transaction. Une nouvelle valeur de vérification de carte est fournie pour chaque nouvelle transaction selon un processus cryptographique, mais le temporisateur limite le délai de génération d'une nouvelle valeur de vérification de carte.

Il est aussi connu le document XP019136995. Ce document propose un schéma dynamique de numéros de carte de crédit virtuels qui réduisent les dommages causés par le vol de numéros de carte de crédit. Un utilisateur peut utiliser un compte de carte de crédit existant pour générer plusieurs numéros de carte de crédit virtuels pouvant être utilisés pour une transaction unique ou liés à un commerçant particulier. Ce schéma est appelé dynamique car les numéros de carte de crédit virtuels peuvent être générés sans contact en ligne avec les émetteurs de carte de crédit. Ces numéros peuvent être traités sans modifier l'infrastructure actuellement en place; les seuls changements se feront aux points finaux, à savoir les utilisateurs de cartes et les émetteurs de cartes.

Enfin il est de plus connu de l'état de l'art Le document XP055139943 The mathematics of identification numbers de Joseph A Gallian

Concernant le cas de l'authentification par défi-réponse le schéma général est le suivant : A et B possèdent une clé secrète de chiffrement K. A , « le solliciteur » veut s'identifier auprès de B , « le vérificateur ». B lui propose de relever un défi : chiffrer à l'aide de la clé secrète K une donnée x selon un procédé de chiffrement de donnée convenu à l'avance , par exemple un de ceux du type cités ci-dessus . Si A chiffre correctement x cela prouve qu'il est en possession de K , ce qui l'authentifie. Le procédé d'authentification objet de l'invention concerne une situation où un grand nombre de solliciteurs s'authentifient auprès d'un vérificateur unique . Chaque solliciteur possédant une clé secrète personnelle unique. C'est par exemple le cas de l'authentification d'une carte bancaire lors d'un paiement chez un commerçant à l'aide d'un terminal de paiement électronique (TPE) . Une authentification à distance de la carte bancaire peut être effectuée (en général pour des paiements d'un montant élevé). Cette authentification à distance est menée à l'aide d'un procédé de cryptographie symétrique utilisant un protocole « défi/réponse ». La technique connue est la suivante : une clé secrète **k** est inscrite dans la mémoire de la puce dans sa partie illisible. Lors du paiement le terminal interroge un centre de contrôle à distance qui envoie à la carte une valeur aléatoire x . La carte calcule alors $y = f(k,x)$ où $f$ est un algorithme de calcul symétrique utilisant la clé secrète **k.** La valeur **y**, qui est le chiffre de x avec la clé **k**, est transmise au centre de contrôle qui lui-même calcule la valeur $f(k,x)$ à l'aide de **k** qu'il détient aussi. S'il retrouve **y** cela prouve que la carte détient la clé secrète **k**. Ce qui authentifie la carte de paiement. Dans ce procédé d'authentification il est nécessaire que le centre de contrôle détienne les clés secrètes de toutes les cartes puisque le système cryptographique est symétrique. Par le procédé objet de l'invention le contrôleur central n'a pas à détenir la clé secrète de chaque solliciteur , cela bien que le système soit symétrique. Chaque clé secrète et personnelle étant associée à une « information publique » , appelée clé publique, permettant au vérificateur de procéder aux calculs de vérification .

Des procédés de signatures numériques dérivant de ce protocole d'authentification par défi-réponse seront aussi exposés. L'état de la technique dans ce domaine relève de la cryptographie asymétrique et repose en général sur l'arithmétique modulaire et l'ensemble des classes résiduelles de $\mathbb{Z}$ modulo un entier n (structures $\mathbb{Z}/n\mathbb{Z}$). Les calculs se font sur des entiers . Dans l'invention les procédés cryptographiques pouvant servir pour des signatures numériques sont symétriques et n'utilisent pas $\mathbb{Z}/n\mathbb{Z}$ . Les calculs sont des calculs de composition de fonction.

On mentionne en dernier point l'état de la technique existante concernant le chiffrement par carré latin , dit aussi "cryptosystème associé à un carré latin donné L". Un carré latin est toujours défini dans les manuels et la littérature mathématique comme un tableau ou une matrice composé de n lignes et n colonnes (carré latin d'ordre n) dans lequel chaque ligne et chaque colonne ne contiennent qu'une seule fois le même symbole , par exemple :

| | | | |
|---|---|---|---|
| 4 | 3 | 1 | 2 |
| 2 | 1 | 4 | 3 |
| 3 | 4 | 2 | 1 |
| 1 | 2 | 3 | 4 |

On peut citer comme référence documentaire par exemple : Jurgen Muller, "Cryptography" Universitat Braunschweig WS 2007 , Universitat Siegen WS 2005 , Universitat Duisburg-Essen SS 2004 , page 94 , § (23.21) . Le "chiffrement associé à un carré latin L" est donc en général défini dans les manuels par une fonction qui associe au symbole i du message , de rang j dans M, le symbole du carré latin figurant "colonne i , ligne j" , noté par exemple $a_{ij}$, ou L(i,j). Par exemple si L est le carré latin défini ci-dessus , pour des messages et cryptogrammes dont l'alphabet est {1,2,3,4} on chiffre M = 42 par **21** (chiffre de 4 = élément du carré en colonne 4 , ligne 1; chiffre de 2 = élément du carré colonne 2 ligne 2). Dans de tels cryptosystèmes la clé secrète de chiffrement est donc un carré latin choisi de manière aléatoire et cette clé est toujours définie et présentée comme un "tableau" , ou "matrice" que l'on doit visualiser pour pouvoir chiffrer. La fonction de chiffrement E est définie par référence à la matrice L : $E(i_j) = L(i,j)$. Il est donc toujours nécessaire dans l'état de la technique existante que la clé de chiffrement soit donnée sous forme de matrice ou tableau visuel.

## C-Exposé de l'invention

L'invention consiste en un dispositif qui utilisé dans des systèmes cryptographiques symétriques permet que la clé secrète de chiffrement soit modifiable , de manière publique et sûre, pour chaque chiffrement de message ou , dans le cas de l'authentification , que la personne vérificatrice de l'identité d'une autre par un procédé de cryptographie symétrique , lors par exemple d'un protocole d'authentification par défi-réponse, n'ait pas à détenir la clé secrète de celle-ci . Ce dispositif est universellement applicable aux cryptosystèmes dont la clé secrète de chiffrement est une suite aléatoire de symboles (suites de bits, suite de lettres etc..; ou une permutation des éléments d'un ensemble quelconque E).

Le premier point important à mentionner maintenant concerne les bases mathématiques de l'invention. L'outil mathématique utilisé dans l'invention est la structure algébrique de groupe (Se, o) où Se est l'ensemble des permutations d'un ensemble E ordonné et o l'opération de composition de fonctions . Le sous-groupe cyclique **G** de Se est le groupe cyclique engendré par une permutation $p$ de E par « exponentiation » de la fonction bijective $p$ de E dans E qui définit la permutation $p$. **G** est un groupe cyclique puisque que mathématiquement un groupe cyclique d'ordre n est un groupe dans lequel il existe un élément $h$ tel que tout élément du groupe puisse s'exprimer (en notation multiplicative) sous forme d'une exponentiation de $h$ , cet élément $h$ étant appelé générateur du groupe cyclique ; et tel que pour tout x on a $h^x = h^j$ avec j $\equiv$ x mod n .Le dispositif au fondement de l'invention est un ensemble d'étapes de procédés et de calculs utilisant la structure (Se, o) et ses sous-groupes cycliques **G**. Il est donc nécessaire de commencer l'exposé de l'invention par le rappel de plusieurs résultats mathématiques et de méthodes de calcul concernant la structure algébrique $(S_e, o)$ et ses sous-groupes cycliques **G**. Ces résultats sont en général connus .Dans tous les cas on demandera de les admettre. La présente description n'étant pas un traité de mathématique mais ayant seulement pour but de montrer comment sont utilisés ces résultats pour produire l'invention.

L'exposé de l'invention sera donc divisé en deux sections : une section **a)** concernant les outils purement mathématiques nécessaires à la compréhension de l'invention, une section **b)** concernant les applications cryptographiques de ces outils , objets de l'invention proprement dite.

### a) - Mathématiques

§ 1 - Groupe symétrique d'un ensemble E

Soit E un ensemble quelconque d'éléments. On appelle en mathématique Groupe symétrique de E l'ensemble des permutations de E et on note cet ensemble Se. Se est aussi l'ensemble des bijections de E dans E si E est muni d'un ordre.Par exemple (3 1 2) est une bijection $p$ de l'ensemble {1,2,3} dans lui-même muni de l'ordre standard des entiers naturels. $p$ est définie par p(1) = 3, p(2) = 1 p(3) = 2.

§ 2- Cycle d'une permutation

Le cycle d'une permutation S appartenant à $S_e$, pour un élément i de cette permutation, est la suite (i, $e_1$, $e_2$, ....., $p^{h-1}(i)$), telle que : $p^1(i) = e_1$, $p^2(i) = e_2$, ....., $p^h(i) = i$, où :

- $p$ est la bijection de E dans E associée à la permutation S.
- $p^n$ est la bijection $p$ o $p$ o....o $p$, o étant l'opération de composition de fonction itérée n-1 fois.
- h est le plus petit entier tel que $p^h(i) = i$.

Le « cycle d'une permutation » est un concept identique à celui de « cycle d'une bijection » .

La littérature mathématique appelle aussi parfois de tels objets des « orbites » (orbite de l'élément i selon $p$), ou « disjoints » du fait qu'ils opèrent une partition de E en ensembles disjoints. Ici on les appellera « cycles », ou « disjoints ».

On donne un exemple de décomposition de permutation en cycle.

**Exemple :**

Soit S une permutation des neuf premiers entiers naturels définie de la manière suivante:

$$S = (769143528)$$

S s'écrit comme une fonction bijective $p$ de {1,2,3,4,5,6,7,8,9} dans {1,2,3,4,5,6,7,8,9} muni de l'ordre standard des entiers : $p(1) = 7$, $p(2) = 6$, $p(3) = 9$, $p(4) = 1$, $p(5) = 4$, $p(6) = 3$, $p(7) = 5$, $p(8) = 2$, $p(9) = 8$ (qui signifie « 7 est le premier élément de S », « 6 le second etc » etc).

Pour i = 1, on a le cycle **$C_1$ = (1754)**, puisque $p(1) = 7$, $p^2(1) = 5$, $p^3(1) = 4$, en effet: $p^2(1) = (p(p(1)) = p(7) = 5$, $p^3(1) = p(5) = 4$, $p^4(1) = p(4) = 1$. Pour i = 2, on a de même $C_2$ = (**2 6 3 9 8**) puisque $p(2) = 6$, $p^2(2) = 3$, $p^3(2) = 9$ , $p^4(2) = 8$, $p^5(2) = 2$.

Tous les éléments de E figurant dans $C_1$ et $C_2$, la fonction $p$ ci-dessus définie ne possède donc que deux cycles .En définissant la longueur d'un cycle par le nombre de ses éléments ces deux cycles sont de longueurs respectives 4 et 5.Une méthode simple et rapide , visuelle, pour construire les cycles d'une permutation est d'écrire celle-ci avec les numéros d'ordre au dessus des éléments de la suite :

$$\overset{1\ 2\ 3\ \ 4\ 5\ \ 6\ 7\ \ 8\ \ 9}{S = (\ 7\ 6\ 9\ \ 1\ 4\ \ 3\ 5\ \ 2\ \ 8\ )}$$

Il suffit alors de lire, « en dessous du 1 le 7 » , donc p(1) = 7 , puis « en dessous du 7 le 5 » , donc $p^2(1)$ = 5, etc..On construit ainsi les cycles de la bijection.

Le premier élément d'un cycle donné peut par ailleurs être n'importe quel élément de ce cycle.

Ainsi le cycle (2 6 3 9 8 2) peut s'écrire (3 9 8 2 6 3) .Dans la suite , les cycles d'une permutation seront pour des raisons de calculs présentés en général sous forme de « puissances » de la bijection *p*, comme par exemple ci-après en ce qui concerne la permutation S = (7 6 9 1 4 3 5 2 8), où le premier élément i du disjoint est l'argument de *p*, on le réécrit par ailleurs à la fin du cycle sous la forme $p^h(i) = i$, on écrit aussi au début du cycle l'identité $p^0(i) = i$ puisque h ≡ 0 mod h, puisque le cycle est de longueur h) :

$p^0(1)= $**1**$, p^1(1)= $**7**$, p^2(1) = 5, p^3(1) = 4, p^4(1) = 1$
$p^0(2) = 2 , p^1(2) = 6 , p^2(2) = 3, p^3(2) = 9, p^4(2) = 8 , p^5(2) = 2$

On mentionne ici aussi que ne seront plus en général distingués dans la suite la "permutation" des éléments d'un ensemble E et la "fonction bijective" de E dans E qui définit la permutation. Ces deux notions seront confondues et permutation ou bijection seront notées par un seul symbole , en général ***p***.

§ 3 - Sous-groupes cycliques de permutations

Un Sous-Groupe cyclique **G** du groupe symétrique Se d'un ensemble E généré par une permutation p de Se est l'ensemble des permutations $\{p, p^2, ... p^j,...,p^a\}$, où $p^1 = p, p^2 = p \circ p, p^3 = p \circ p \circ p$, etc. L'opération o est l'opération de composition de fonction . L'entier **a** est le ppcm des entiers représentant la longueur des cycles de p. Ce sous-groupe est cyclique modulo **a** et commutatif. L'entier **a** est aussi ce que l'on appelle en mathématiques l'ordre de la permutation *p*, c'est à dire le plus petit entier h tel que la fonction $p^h$ est la permutation identique. L'entier **a** est aussi l'ordre, au sens de cardinal, du sous-groupe cyclique **G** généré par p. Donc : soit *p* une bijection de E dans E , E muni d'un ordre (au sens de relation d'ordre) .On note $p^j$ la fonction telle que $p^j = p \circ p \circ ... \circ p$, l'opération o de composition de fonctions étant itérée j-1 fois. Si les cycles $C_1$, $C_2$, ...,$C_k$ de *p* ont pour longueur $n_1$, $n_2$, ...$n_k$ alors *p* génère un sous-groupe cyclique **G** de bijections $\{p, p^2, ... p^j,...,p^a\}$, d'ordre a (de cardinal a), avec a = ppcm $(n_1, n_2, ...n_k)$. Ce sous-groupe de $S_e$ contient un nombre de permutations égal à a. Chaque permutation de **G** est unique. <u>**G** est cyclique modulo **a**</u> en ce sens que $p^{a+1} = p^1$, $p^{a+2} = p^2$, ..etc (c'est à dire que $p^x = p^j$ avec j ≡ x mod n). Si h> **a**, par exemple , alors $p^h = p^r$ avec r = reste(h/a). La fonction « reste » associant à la division de deux entiers le reste de la division.

La permutation $p^a$ est l'ordre sur E (<u>ici au sens de relation d'ordre</u>), c'est à dire la fonction identique , c'est à dire aussi la suite ordonnée des arguments de *p* à partir de laquelle est définie celle-ci .Pour résumer , les sous-groupes cycliques de bijections $\{p^1, p^2.....p^j,....,p^a\}$ générés par une bijection (permutation) *p*, sont donc simplement les ensembles : $p^1 = p, p^2 = p \circ p, p^3 = p \circ p \circ p ,...., p^j = p \circ p \circ...\circ p$, l'opération o appliquée j-1 fois, $p^a = p \circ p \circ......\circ p$, l'opération o de composition de fonction appliquée a - 1 fois.

a est le ppcm de la longueur des cycles composant *p* et l'ordre du sous-groupe cyclique de bijections (l'ordre au sens de cardinal, qui ne doit pas être confondu avec l'ordre **o** sur E qui est la relation d'ordre sur E).On donne maintenant deux exemples de sous-groupes cycliques **G** d'un groupe symétrique $S_e$. Des exemples peuvent être utiles pour comprendre l'invention.

**Exemple 1** :

Soit

$$\overset{1\ 2\ 3\ \ 4\ 5\ \ 6\ 7\ \ 8\ \ 9}{p = (\ 7\ 6\ 9\ \ 1\ 4\ \ 3\ 5\ \ 2\ \ 8\ )}$$

une bijection de E = {1,2,3,4,5,6,7,8,9} dans {1,2,3,4,5,6,7,8,9}.

On peut vérifier que cette permutation possède deux cycles (disjoints) de longueur 4 et 5 , qui sont : (1 7 5 4) et (2 6 3 9 8 2). On peut vérifier aussi que cette bijection engendre le sous-groupe cyclique **G** de bijections de $S_e$ suivant qui possède 20 éléments puisque ppcm(4,5) = 20 :

|       | **1** | **2** | **3** | **4** | **5** | **6** | **7** | **8** | **9** |          |
|-------|-------|-------|-------|-------|-------|-------|-------|-------|-------|----------|
| $p$ = | (7    | 6     | 9     | 1     | 4     | 3     | 5     | 2     | 8)    |          |
| $p^2$ = | (5  | 3     | 8     | 7     | 1     | 9     | 4     | 6     | 2)    | $= p \circ p$ |
| $p^3$ = | (4  | 9     | 2     | 5     | 7     | 8     | 1     | 3     | 6)    | $= p \circ p \circ p$ |
| $p^4$ = | (1  | 8     | 6     | 4     | 5     | 2     | 7     | 9     | 3)    | etc,     |
| $p^5$ = | (7  | 2     | 3     | 1     | 4     | 6     | 5     | 8     | 9)    |          |
| $p^6$ = | (5  | 6     | 9     | 7     | 1     | 3     | 4     | 2     | 8)    |          |
| $p^7$ = | (4  | 3     | 8     | 5     | 7     | 9     | 1     | 6     | 2)    |          |
| $p^8$ = | (1  | 9     | 2     | 4     | 5     | 8     | 7     | 3     | 6)    |          |
| $p^9$ = | (7  | 8     | 6     | 1     | 4     | 2     | 5     | 9     | 3)    |          |
| $p^{10}$ = | (5 | 2    | 3     | 7     | 1     | 6     | 4     | 8     | 9)    |          |
| $p^{11}$ = | (4 | 6    | 9     | 5     | 7     | 3     | 1     | 2     | 8)    |          |
| $p^{12}$ = | (1 | 3    | 8     | 4     | 5     | 9     | 7     | 6     | 2)    |          |
| $p^{13}$ = | (7 | 9    | 2     | 1     | 4     | 8     | 5     | 3     | 6)    |          |
| $p^{14}$ = | (5 | 8    | 6     | 7     | 1     | 2     | 4     | 9     | 3)    |          |
| $p^{15}$ = | (4 | 2    | 3     | 5     | 7     | 6     | 1     | 8     | 9)    |          |
| $p^{16}$ = | (1 | 6    | 9     | 4     | 5     | 3     | 7     | 2     | 8)    |          |
| $p^{17}$ = | (7 | 3    | 8     | 1     | 4     | 9     | 5     | 6     | 2)    |          |
| $p^{18}$ = | (5 | 9    | 2     | 7     | 1     | 8     | 4     | 3     | 6)    |          |
| $p^{19}$ = | (4 | 8    | 6     | 5     | 7     | 2     | 1     | 9     | 3)    |          |
| **$p^{20}$ =** | **(1** | **2** | **3** | **4** | **5** | **6** | **7** | **8** | **9)** | **= o** |

Ce sous-groupe de bijections est cyclique modulo 20. En effet $p^{20}$ = (1 2 3 4 5 6 7 8 9) qui est l'ordre (relation d'ordre) sur E et la fonction identique , donc on a à la suite : $p^{21}(1) = p(p^{20}(1)) = $ p(1) = **7**, $p^{21}(2) = $ p($p^{20}(2)$) = **6**, etc, on calcule ainsi la suite $p$ primitive génératrice de **G** qui est **S = (7 6 9 1 4 3 5 2 8).** Et donc $p^{21} = p^1$, $p^{22} = p^2$, $p^{23} = p^3$, etc, le sous-groupe cyclique de bijections est bien cyclique modulo 20.

## Exemple 2

Dans ce second exemple E est composé d'éléments qui sont des ensembles de symboles , ou blocs de symboles. Ces blocs de symboles sont des triplets de bits. Soit E = $\{0,1\}^3$ l'ensemble des huit triplets de bits. Soit **p = (000 010 111 110 001 101 100 011)** une permutation de E. On définit l'ordre sur E par la suite ordonnée **o = (001 111 101 011 100 110 000 010)**. On écrit les triplets de bits de **o** en petits caractères pour mettre en valeur qu'ils constituent des « numéros d'ordre », comme ci-dessus pour les suites de n premiers entiers. Ainsi **001** est donc premier élément de E , 111 le second , 101 le troisième etc...

Donc on a :

$$p = (\;\; \underset{000}{\overset{001}{\,}} \;\; \underset{010}{\overset{111}{\,}} \;\; \underset{111}{\overset{101}{\,}} \;\; \underset{110}{\overset{011}{\,}} \;\; \underset{001}{\overset{100}{\,}} \;\; \underset{101}{\overset{110}{\,}} \;\; \underset{100}{\overset{000}{\,}} \;\; \underset{011}{\overset{010}{\,}} \;\;)$$

La bijection associée à la permutation **p** (du même nom **p**) est donc : $p(\mathbf{001})$ = 000 , $p(\mathbf{111})$ = 010, $p(\mathbf{101})$ = 111, $p(\mathbf{011})$ = 110, $p(\mathbf{100})$ = 001, $p(\mathbf{110})$ = 101, $p(\mathbf{000})$ = 100, $p(\mathbf{010})$ = 011. Cette bijection possède deux cycles de longueurs 3 et 5 qui sont sous forme de disjoints:

(001 000 100)

(111 010 011 110 101)

Cette permutation de triplets de bits engendrera donc un sous-groupe **G** cyclique de permutations (bijections de $\{0,1\}^3$ dans $\{0,1\}^3$) d'ordre (cardinal) : ppcm(3,5) = 15. Ce groupe est cyclique mod15. On peut vérifier en effet que **G** est :

| 001 | 111 | 101 | 011 | 100 | 110 | 000 | 010 | |
|-----|-----|-----|-----|-----|-----|-----|-----|---|
| 000 | 010 | 111 | 110 | 001 | 101 | 100 | 011 | $= p^1$ |
| 100 | 011 | 010 | 101 | 000 | 111 | 001 | 110 | $= p^2$ |
| 001 | 110 | 011 | 111 | 100 | 010 | 000 | 101 | $= p^3$ |
| 000 | 101 | 110 | 010 | 001 | 011 | 100 | 111 | $= p^4$ |
| 100 | 111 | 101 | 011 | 000 | 110 | 001 | 010 | $= p^5$ |
| 001 | 010 | 111 | 110 | 100 | 101 | 000 | 011 | $= p^6$ |
| 000 | 011 | 010 | 101 | 001 | 111 | 100 | 110 | $= p^7$ |
| 100 | 110 | 011 | 111 | 000 | 010 | 001 | 101 | $= p^8$ |
| 001 | 101 | 110 | 010 | 100 | 011 | 000 | 111 | $= p^9$ |
| 000 | 111 | 101 | 011 | 001 | 110 | 100 | 010 | $= p^{10}$ |
| 100 | 010 | 111 | 110 | 000 | 101 | 001 | 011 | $= p^{11}$ |
| 001 | 011 | 010 | 101 | 100 | 111 | 000 | 110 | $= p^{12}$ |
| 000 | 110 | 011 | 111 | 001 | 010 | 100 | 101 | $= p^{13}$ |
| 100 | 101 | 110 | 010 | 000 | 011 | 001 | 111 | $= p^{14}$ |
| **001** | **111** | **101** | **011** | **100** | **110** | **000** | **010** | $= p^{15}$ |

On fait donc ici la remarque que E peut être composé de blocs de symboles (des n-uplets de bits par exemple) et non pas seulement de symboles . Le groupe symétrique $S_e$ de E dans un tel cas est donc composé de permutations dont les éléments sont des blocs de symboles.Dès lors quand E est constitué de blocs de symboles on peut aussi faire la remarque qu'il n'est pas nécessaire que ces blocs de symboles soient « standards » , comme par exemple des n-uplets de bits de même longueur (cas où E = {0,1}$^n$ par exemple) .Il est en effet possible de choisir aléatoirement les blocs de symboles qui composent E . La seule condition requise est que ces blocs soient tous différents deux à deux. Par exemple E peut être : {0011, 00, 11011, 10110, 11 , 0010, 0000, 1100 , 00001 }, ces neuf n-uplets de bits ainsi que leur ordre étant choisi aléatoirement. En dernier point enfin on rappelle que les sous-groupes cycliques de $S_e$ sont commutatifs et que toutes les permutations appartenant à un sous-groupe cyclique de $S_e$ sont différentes les unes des autres.

§ 4-Calcul de $p^j$ dans G

Calcul de $p^j$ dans **G** : une méthode de calcul appelée {$S^a$} → $S^j$, ou {$p^a$} → $p^j$, ou encore plus simplement méthode « j » calcule la permutation $p^j$ de **G.** L'algorithme est le suivant :
Soit $p$ une permutation des éléments d'un ensemble E quelconque exprimée sous forme de cycles

1- Si i est le premier élément d'un des cycles C de $p$, alors $p^j(i) = p^r(i)$, avec r = j mod L, L étant la longueur du cycle C de i.
2- Sinon : On cherche le cycle $C_k$, dont le premier élément est k, dans lequel figure i. Cela nous donne l'entier x tel que $p^x(k) = i$, qui est donné par le cycle $C_k$.

On calcule ensuite le reste r de (j + x)/$L_k$, $L_k$ étant la longueur du cycle $C_k$. On obtient alors : $p^j(i) = p^r(k)$, avec $r \equiv (j + x) \bmod L_k$.
On ne démontre pas cet algorithme. Celui-ci n'est qu'une méthode de calcul mathématique et n'est pas revendiqué en lui-même comme une invention. Seule son utilisation sera revendiquée. Le fait à retenir est que cette méthode de calcul permet d'obtenir de manière rapide la permutation appartenant à un sous-groupe cyclique **G** de $S_e$ engendré par $p$ qui est associée à un entier **j** quelconque , donc la permutation $p^j$

§ 5- w-uplet du produit cartésien des disjoints d'une permutation.

Soit E un ensemble ordonné et $p$ une permutation de E engendrant le sous-groupe cyclique **G** de $S_e$ défini par **G** = {$p,p^2, ..,p^a$}, **a** ppcm des longueurs des disjoints de $p$.Soient $C_1$, $C_2$ ,.... .$C_w$ les w cycles (disjoints) de $p$, et $j_1$, $j_2$,....$j_w$ les w premiers éléments (éléments pris comme éléments de base) de chaque cycle de $p$. Dès lors si les entiers définissant les longueurs des w cycles de $p$ n'ont pas de diviseur commun, alors pour chaque w-uplet ($w_1$, $w_2$, ...$w_w$) du produit cartésien $C_1$ x $C_2$ x.... x $C_w$ il existe une et une seule permutation $p^x$ appartenant à G telle que :

$$p^x(j_1) = w_1, \quad p^x(j_2) = w_2, .............., p^x(j_w) = w_w"$$

On ne démontre pas ce résultat. On exhibe simplement un exemple permettant de comprendre ce résultat.Exemple de w-uplets dans les permutations d'un sous-groupe cyclique G de $S_e$:

Soit la permutation $p$ suivante de E = {1,2,3,4,5,6,7,8,9} muni de l'ordre standard des entiers:

$$1\ 2\ 3\ 4\ 5\ 6\ 7\ 8\ 9$$
$$p = (\ 3\ 9\ 5\ 7\ 8\ 4\ 6\ 1\ 2\ )$$

Les disjoints de $p$ sont au nombre de 3 (donc w = 3) et sont :

$C_1$ = (1 3 5 8), de longueur $L_1$ = 4
$C_2$ = (2 9 2), de longueur $L_2$ = 2
$C_3$ = (4 7 6), de longueur $L_3$ = 3

Le ppcm des entiers représentant la longueur des cycles de $p$ est ppcm {4,2,3} = 12.

Le sous-groupe cyclique **G** de $S_e$ généré par $p$ est reproduit ci-après :

|  | **1** | **2** | **3** | **4** | **5** | **6** | **7** | **8** | **9** | |
|---|---|---|---|---|---|---|---|---|---|---|
| $p =$ | (**3** | **9** | 5 | **7** | 8 | 4 | 6 | 1 | 2) | |
| $p^2 =$ | (**5** | **2** | 8 | **6** | 1 | 7 | 4 | 3 | 9) | $= p \circ p$ |
| $p^3 =$ | (**8** | **9** | 1 | **4** | 3 | 6 | 7 | 5 | 2) | $= p \circ p \circ p$, etc, |
| $p^4 =$ | (**1** | **2** | 3 | **7** | 5 | 4 | 6 | 8 | 9) | |
| $p^5 =$ | (**3** | **9** | 5 | **6** | 8 | 7 | 4 | 1 | 2) | |
| $p^6 =$ | (**5** | **2** | 8 | **4** | 1 | 6 | 7 | 3 | 9) | |
| $p^7 =$ | (**8** | **9** | 1 | **7** | 3 | 4 | 6 | 5 | 2) | |
| $p^8 =$ | (**1** | **2** | 3 | **6** | 5 | 7 | 4 | 8 | 9) | |
| $p^9 =$ | (**3** | **9** | 5 | **4** | 8 | 6 | 7 | 1 | 2) | |
| $p^{10} =$ | (**5** | **2** | 8 | **7** | 1 | 4 | 6 | 3 | 9) | |
| $p^{11} =$ | (**8** | **9** | 1 | **6** | 3 | 7 | 4 | 5 | 2) | |
| $p^{12} =$ | (**1** | **2** | 3 | **4** | 5 | 6 | 7 | 8 | 9) | |

On constate ainsi que les éléments du premier cycle (disjoint) $C_1$ : 3 , 5 , 8 , 1 , reviennent de manière cyclique dans la colonne 1 .De même pour les éléments du cycle $C_2$ qui reviennent en boucle dans la colonne 2 et pour les éléments du cycle $C_3$ qui reviennent dans la colonne 4.

Dans chaque permutation appartenant à G figure un triplet appartenant au produit cartésien des disjoints $C_1$, $C_2$, $C_3$. Ce triplet figure aux colonnes de rang **1**, **2** et **4**, lesquels numéros sont les premiers éléments de chacun des trois cycles. On constate par ailleurs que ces triplets sont tous différents et donc puisque a est égal à 12 , qu'il existe 12 triplets différents.On a en effet les triplets suivants (chiffres en petit et en gras = numéros de colonne) :

| **1** | **2** | **4** |
|---|---|---|
| 3 | 9 | 7 |
| 5 | 2 | 6 |
| 8 | 9 | 4 |
| 1 | 2 | 7 |
| 3 | 9 | 6 |
| 5 | 2 | 4 |
| 8 | 9 | 7 |
| 1 | 2 | 6 |
| 3 | 9 | 4 |
| 5 | 2 | 7 |
| 8 | 9 | 6 |
| 1 | 2 | 4 |

Ces triplets sont au nombre de 12 et sont tous différents deux à deux. Un même triplet ne figure que dans une et une seule permutation appartenant à **G** aux colonnes correspondant aux éléments de base des cycles. Un même w-uplet du produit cartésien des disjoints de $p$ ne figure donc pour le cas général que dans une et une seule permutation appartenant à **G** dans ces colonnes , ce que l'on a exprimé ci-dessus par : il existe une et une seule permutation $p^x$ appartenant à **G** telle que : $p^x(j_1) = w_1, p^x(j_2) = w_2,............, p^x(j_w) = w_w$. Dès lors puisque le nombre de w-uplets est égal à **a** avec **a** = ppcm des entiers représentant la longueur des disjoints de $p$, il en résulte que quand ces entiers n'ont pas de diviseur commun l'ensemble des w-uplets figurant dans les permutations composant **G** aux colonnes $j_1, j_2,....j_w$, est égal au produit cartésien des disjoints de S. A chaque w-uplet est associée une et une seule permutation appartenant à **G.** Dans la suite on nommera toujours « w-uplets » les éléments du produit cartésien des disjoints de $p$.

§ 6- Algorithme $\{p^a\} \to \lambda$

Soit $p$ une permutation d'un ensemble E . Les disjoints de $p$ sont de longueur n'ayant pas de diviseur commun. Soit $w = (w_1, w_2, ...w_j.,.....w_w)$ un w-uplet de $C_1$ x $C_2$ x...x $C_j$ x...... $C_w$, élément du produit cartésien des disjoints (cycles) de $p.p$ est donc composée de w disjoints. Soit : $c_{11}$, l'élément de base du cycle $C_1$, $c_{12}$, l'élément de base du cycle $C_2$,.....,$c_{1j}$ l'élément de base de $C_j$,..............., $c_{1w}$ l'élément de base du cycle $C_w$

La permutation $\lambda$ appartenant à **G** et associée à $w$ est calculée en cherchant la valeur $\lambda(i)$ pour chaque i de E. Si i est le n-ième élément de E selon l'ordre de E, alors $\lambda(1)$ est le n-ième élément de la permutation $\lambda$ (la fonction bijective $\lambda$ de E dans E étant la bijection définissant la permutation homonyme $\lambda$). Ceci est fait de la manière suivante:

- 1) si i = $c_{1j}$, pour $1 \leq j \leq w$, c'est à dire si i est un des éléments de base des cycles de $p$, alors o pose $\lambda(i) = \lambda(c_{1j}) = w_j$,
- 2) sinon si i $\neq c_{1j}$ pour tout j , on cherche le cycle $C_k$ de $p$ auquel i appartient. Cela détermine le premier élément $c_{lk}$ du cycle $C_k$, $w_k$, et l'entier $n_k$ tel que $w_k = p^{n_k}(c_{lk})$. On pose alors $\lambda(i) = p^{n_k}(i)$ avec $p^{n_k}(i)$ déterminé par : Chercher dans le cycle $C_k$ l'entier x tel que $p^x(c_{lk}) = i$. Calculer ensuite le reste r de $(n_k + x)/L_k$, $L_k$ étant la longueur du cycle $C_k$ de i. On obtient alors : $p^{n_k}(i) = p^r(c_{lk})$, avec $r \equiv (n_k + x)$mod $L_k$.

De même que pour l'algorithme $\{p^a\} \to p^j$ on ne démontre pas cet algorithme. Celui-ci n'est qu'une méthode de calcul mathématique et n'est pas revendiqué en lui-même comme une invention. Seule son utilisation sera revendiquée. Le fait à retenir est que : étant donné $p$ une permutation des éléments d'un ensemble E quelconque ; les longueurs des disjoints de $p$ n'ayant pas de diviseur commun , alors la méthode de calcul $\{p^a\} \to \lambda$ permet d'obtenir de manière rapide la permutation $\lambda$ appartenant au sous-groupe cyclique **G** de $S_e$ engendré par $p$ qui est associée à un élément quelconque donné w (w-uplet) du produit cartésien des disjoints de $p$.

§ 7- Couples de solutions d'une composition de deux bijections où les deux composantes sont inconnues :

Soit $p$ une bijection donnée de E dans E , E fini de cardinal n. On cherche les bijections inconnues $x$ et $y$ telles que $x$ o $y = p$, o composition de fonction.

Exemple :

Soit $p$ = (2 3 1) la bijection de {1,2,3} dans {1,2,3} muni de l'ordre standard des entiers naturels Cette permutation est une permutation appartenant au groupe symétrique $S_e$ de E = {1, 2, 3}.

On a par ailleurs $S_e$ = {(1 2 3), (1 3 2), (2 1 3), (2 3 1), (3 1 2), (3 2 1) }. C'est l'ensemble des permutations de {1,2,3}. On constate dès lors que dans l'équation $x$ o $y =$ **(2 3 1)** il existe 3! couples de bijection $(x,y)$ qui sont solution de l'équation. En effet on peut vérifier que : (2 3 1) o (1 2 3) = **(2 3 1)**, (3 2 1) o (1 3 2) = **(2 3 1)**, (1 3 2) o (2 1 3) = **(2 3 1)** (1 2 3) o (2 3 1) = **(2 3 1)**, (3 1 2) o (3 1 2) = **(2 3 1)**, (2 1 3) o (3 2 1) = (2 3 **1)**

Dans la seconde équation par exemple on a $x(1) =$ **3**, $x(3) =$ **2**, $x(3) =$ **1** ; et $y(1) =$ **1**, $y(2) =$ **3**, $y(3) =$ **2**. Donc en composant $(x$ o $y)$, c'est à dire en calculant $y(x(i))$ pour tout i de {1,2,3} on a bien: $y(x(1)) = y(3) =$ **2** $y(x(2)) = y(2) =$ **3** $y(x(3)) = y(1) =$ **1**.

Pour chaque bijection $x$ choisie il existe une bijection $y$ telle que $(x$ o $y) =$ **(2 3 1)**. Donc 3! couples de solutions $(x y)$. Par ailleurs on peut remarquer que chaque bijection $y$ est différente de chaque autre. Ce résultat s'énonce mathématiquement ainsi : soit $h$ une fonction bijective d'un ensemble E dans E , E de cardinal n fini. Alors , pour toute fonction bijective g de E dans E , il existe une fonction bijective $f$ de E dans E telle que $f$ o g = $h$ ; et si g' $\neq$ g il existe une fonction $f'$ telle que $f'$ o g' = $h$, avec $f \neq f'$. Ce qu'il y a à retenir est que l'équation $x$ o $y = f$, où $x, y$ et $f$ sont des bijections définies sur un ensemble E de cardinal n possède n! couples de solutions $(x,y)$. Cette propriété est parfois énoncée par « toute suite divise toute suite » ou « toute bijection divise toute bijection » en ce sens que : une bijection $f$ sur un ensemble E étant donnée , pour toute bijection g de E il existe une bijection $x$ de E qui satisfait l'équation $x$ o g = $f$. L'équation $x$ o g = $f$ pouvant être considérée comme une division de $f$ par g (division à droite , la division à gauche s'exprimant par g o *x* = *f*).

§ 8 - Formule de permutation d'une suite de symboles

Ce dernier paragraphe rappelle un résultat mathématique simple et connu.

Soit par exemple **S** = (**0 1 1 0 1**) une suite de cinq bits. S peut être définie comme une fonction de {1,2,3,4,5} dans {0,1} qui assigne à un numéro d'ordre pris dans {1,2,3,4,5} un élément de {0,1}. L'ordre sur {1,2,3,4,5} est l'ordre standard des entiers naturels. Ainsi si on appelle b la fonction de {1,2,3,4,5} dans {0,1}, alors S est définie par (avec l'ordre standard des entiers): $b(1) = 0$, $b(2) = 1$, $b(3) = 1$, $b(4) = 0$, $b(5) = 1$

On permute dès lors S par une permutation *p* de {1,2,3,4,5}, par exemple *p* = (**5 3 4 1 2**) en substituant au 1er bit le **5**ème, au 2nd bit le 3ème etc..Mathématiquement cela s'opère en définissant la bijection *p* de {1,2,3,4,5} dans {1,2,3,4,5} qui associe chaque élément de (**5 3 4 1 2**) à un numéro d'ordre : $p(1) = 5$, $p(2) = 3$, $p(3) = 4$, $p(4) = 1$, $p(5) = 2$, puis en procédant à la composition de fonction (*p o b*), c'est à dire en calculant *b(p(i))* pour tout i de {1,2,3,4,5}.

Ainsi S est permutée par : $b(p(1)) = b(5) = 1$, $b(p(2)) = b(3) = 1$, $b(p(3)) = b(4) = 0$, $b(p(4)) = b(1) = 0$, $b(p(5)) = b(2) = 1$.

Note : l'ensemble des numéros d'ordre {1,2,....,n} peut ne pas être l'ensemble des n premiers entiers.

**b) - Applications cryptographiques.**

- § 1 : systèmes de chiffrement symétriques à clé secrète

Soit **K** une clé secrète sous forme par exemple de suites de bits aléatoires de longueur finie servant dans un procédé de chiffrement symétrique entre A et B . A et B construisent et conçoivent alors leur clé leur en découpant celle-ci en n-uplets de bits de manière à ce que ces n-uplets soient tous différents les uns des autres . Ils peuvent par exemple choisir un ensemble E = {0,1}$^n$ pour un n donné. E ordonné . Ils choisissent ou construisent ensuite une permutation *p* de E , donc une permutation appartenant au groupe symétrique $S_e$ de E, avec *p* composée de nombreux disjoints. Une structure algébrique de groupe ($S_e$, **o**) et un sous-groupe-cyclique **G** de $S_e$ engendré par *p* sont ainsi construits , où **G** = {$p^1, p^2 ..... p^j,...., p^a$} avec **a** = ppcm des entiers représentant la longueurs des disjoints (cycles) *de p . p* est alors leur clé secrète **K**.

Exemple: E = {0,1}$^3$. Dans la pratique évidemment n peut être choisi plus grand. C'est l'ensemble des triplets de bits. $S_e$ est l'ensemble des permutation de E . A et B choisissent aussi un ordre sur E (relation d'ordre) appelé **o**, cela est nécessaire pour définir les permutations de E qui sont des bijections de E dans E : o = (**001 111 101 011 100 110 000 010).**

Une permutation **K** appartenant à $S_e$ est choisie composée de deux disjoints de longueur 3 et 5 :

**(001 000 100)**
**(111 010 011 110 101)**

Donc

$$p = K = \begin{pmatrix} \mathbf{001} & \mathbf{111} & \mathbf{101} & \mathbf{011} & \mathbf{100} & \mathbf{110} & \mathbf{000} & \mathbf{010} \\ \mathbf{000} & \mathbf{010} & \mathbf{111} & \mathbf{110} & \mathbf{001} & \mathbf{101} & \mathbf{100} & \mathbf{011} \end{pmatrix}$$

Ses disjoints sous formes de cycles exprimés par les «puissances» de la fonction bijective *p* pour le premier élément de chaque cycle sont donc:

$$C_1 = \quad p^0(001) = \mathbf{001} \quad p^1(001) = \mathbf{000} \quad p^2(001) = \mathbf{100} \quad p^3(001) = \mathbf{001}$$

$$C_2 = \quad p^0(111) = \mathbf{111} \quad p^1(111) = \mathbf{010} \quad p^2(111) = \mathbf{011} \quad p^3(111) = \mathbf{110} \quad p^4(111) = \mathbf{101}$$

$$p^5(111) = \mathbf{111}$$

Le nombre de cycles de **K** et leur longueur sont évidemment secrets. L'ordre o (relation d'ordre) sur E est aussi secret. Dès lors si A par exemple veut changer de clé de chiffrement il choisit un entier j de manière aléatoire et calcule $K^j$, c'est à dire $p^j$, $p$ étant la bijection associée à **K.** Il communique de manière publique j à B qui peut lui aussi calculer $K^j$. La nouvelle clé $K^j$ s'obtenant en calculant $p^j$(i) pour chaque i de E selon l'ordre **o** sur E. Ce calcul s'effectue par l'algorithme $\{p^a\} \rightarrow p^j$: soit j = 8. **K** possède deux cycles de longueur 3 et 5 et donc engendre un sous-groupe cyclique de 15 permutations (voir sous-groupe cyclique construit en totalité section A , § 3). A calcule alors par l'algorithme $\{p^a\}$ $\rightarrow p^j$ la suite de valeurs suivante qui constitue la permutation $p^8$ appartenant au sous-groupe cyclique **G** engendré par $p$ : $p^8$ (**001**), $p^8$ (111), $p^8$(101), $p^8$(011), $p^8$(100), $p^8$(110), $p^8$(000), $p^8$(010). On détaille le calcul des trois premières valeurs pour montrer le fonctionnement de l'algorithme :

$p^8(001) = p^2(001)$, en effet 001 appartient au cycle $C_1$, cyclique modulo 3 , donc $p^8$ (001) = $p^2(001)$, puisque $2 \equiv 8 \mod 3$, et $p^2(001)$ = **100** qu'on lit dans le cycle $C_1$.

De même $p^8$ (111) = $p^3$(111), car 111 appartient à $C_2$ cyclique modulo 5, et 3 = 8 mod 5 . Et $p^3$(111) = **110**, qu'on lit dans $C_2$.

Pour $p^8$(101), l'argument qui est 101 n'est pas élément de base (premier élément) d'un des deux cycles. On doit donc chercher le cycle auquel 101 appartient . On trouve que c'est $C_2$ et que $p^4$(111) = 101. On substitue donc $p^4$(111) à 101 dans $p^8$(101). On obtient $p^8(p^4$(111)) qui est égal à $p^{12}$(111). On calcule alors $p^{12}$(111) modulo 5 puisque $C_2$ est cyclique modulo 5 : $p^{12}$(111) = $p^2$(111) = **011**, qu'on lit dans $C_2$.

On peut vérifier au final que A obtient

$$K^8 = 100 \quad 110 \quad 011 \quad 111 \quad 000 \quad 010 \quad 001 \quad 101$$

A envoie 8 à B qui peut lui aussi calculer $K^8$ par $\{p^a\} \rightarrow p^j$ A et B ont donc changé leur clé qui est devenue $K^8$ = 100 110 011 111 000 010 001 101. Ils peuvent ensuite éventuellement concaténer celle-ci :**100110011111000010001101** . Dans la pratique A envoie l'entier qui sert à changer de clé en même temps que le cryptogramme. Le cryptogramme est donc un couple **(j, C).** Le cryptosystème ainsi décrit est donc sur le fond un système de chiffrement symétrique à clé jetable.

Si E = $\{0,1\}^8$ par exemple , E est composé de $2^8$ = 256 huit-uplets de bits. Une permutation de 256 huit-uplets de bits qui serait composée par exemple de treize cycles de longueur 7, 7 , 49 , 13 , 11 , 8, 9 , 17 , 19 , 23 , 25 , 31 , 37 , engendrerait sous-groupe cyclique **G** de $S_e$ dont le nombre de permutation serait ppcm (7, 7 , 49 , 13, 11, 8, 9, 17 , 19 , 23 , 25 , 31, 37). **G** comporterait donc 49 x 13 x 11 x 8 x 9 x 17 x 19 x 23 x 25 x 31 x 37 = 107 472 759 193 800 permutations différentes. Un ensemble de 107 472 759 193 800 clés jetables serait alors à disposition des protagonistes A et B . A noter que ce nombre est le nombre de clés jetables possibles , et non le nombre de clés secrètes possibles qui est 256 ! . L'exemple a utilisé une clé secrète sous forme de suite de bits. Mais le dispositif s'applique à n'importe quelle clé secrète donnée sous forme de suites de symboles ou de blocs de symboles aléatoire (suite d'hexadécimaux : 4H5A9F , suite de lettre : algpo,), ainsi qu'à toute clé déjà sous forme de permutation d'un ensemble E (cas classique d'une permutation de n premiers entiers : (6 7 3 9 10 2 4 8 1 5)). On peut noter aussi qu'une clé sous forme binaire peut être découpée selon des n-uplets de bits de longueur aléatoire , ex : 11011 010 00 111, et pas seulement selon des n-uplets de longueur constante appartenant à un ensemble de type $\{0,1\}^n$ comme dans l'exemple.

Note : Le changement de clé peut aussi s'effectuer en utilisant l'algorithme $\{p^a\} \rightarrow \lambda$ si la permutation $p$ est choisie de manière à ce que les longueurs de ses cycles n'aient pas de diviseurs communs . Dans ce cas l'information communiquée avec le cryptogramme est un élément **w** du produit cartésien des disjoints de $p$ qui peut être quelconque car tout élément de ce produit cartésien est associé à une permutation appartenant à **G** (et une seule). Soit par exemple **w** = (000 110). En appelant $\lambda_w$ la permutation appartenant à **G** associée à ce w-uplet le calcul de la nouvelle clé s'opère en calculant $\lambda_w$ (i) pour chaque i de E selon l'ordre sur E :

On peut vérifier qu'on obtient par $\{p^a\} \rightarrow \lambda$ :

$$001 \quad 111 \quad 101 \quad 011 \quad 100 \quad 110 \quad 000 \quad 010$$

$$\lambda_w = 000 \quad 110 \quad 011 \quad 111 \quad 001 \quad 010 \quad 100 \quad 101$$

L'émetteur du message envoie alors (**w**, **C**).

Cette méthode , qu'elle utilise un entier j ou un w-uplet w comme information pour modifier de manière publique la clé secrète d'un système symétrique est sûre car l'entier **j** ne révèle absolument aucune information sur la clé secrète primitive $p$. Ni la longueur de $p$, ni le nombre de ses cycles , ni la composition de ceux-ci ne peuvent être déduits de j. **j** peut être choisi de manière aléatoire . Avec la méthode $\{p^a\} \rightarrow \lambda$ seuls sont révélés le nombre de disjoints de $p$ et w éléments de celle-ci. Il est possible toutefois de ne pas révéler les éléments composant **w** en exprimant celui-ci par le w-uplet d'entiers qui correspondent aux exposants «$n_k$» de chaque $w_k$ de **w,** c'est à dire les entiers $n_k$ tels que $w_k$ =

$p^n_k(c_{lk})$. Dans l'exemple ci-dessus $w$ = (000 110) peut ainsi être exprimé par le couple (**1**, **3**) puisque $p^1$(001) = 000 , et $p^3$(111) = 110. L'entier **j** ou le w-uplet $w$ jouent le rôle de clés publique.

Exemples de chiffrement et déchiffrement après modification de la clé secrète

On donne deux exemples . Ces deux modes de chiffrement permettent à l'émetteur du message et au récepteur de chiffrer et déchiffrer sans que la clé de chiffrement jetable soit calculée en totalité avant opération de chiffrement et déchiffrement. Ils utilisent l'algorithme $\{p^a\} \rightarrow p^j$.

Soit **K** une clé secrète composée de $2^n$ n-uplets de bits comme dans l'exemple ci-dessus . Les messages sont des messages binaires de (n x $2^n$) bits. Le chiffrement est l'application d'un XOR entre les bits de K et les bits de M. On définit simplement la relation d'ordre sur E par une fonction $o$ qui associe à chaque entier de {1,......,$2^n$} l'élément de l'ordre **o** sur E correspondant à son rang dans **o**, par exemple si comme dans l'exemple ci-dessus **o = 001 111 101 011 100 110 000 010** on pose $o$(1) = **001**, $o$(2) = **111**, $o$(3) = **101**, etc..Dès lors un chiffrement par XOR calculant $K^J$ + M est effectué par la fonction de chiffrement $c_i = p^j(o(i)) + n_i$ et le déchiffrement par $n_i = c_i.p^j(o(i))$, où $n_i$ est le n-uplet de rang i de M et $c_i$ le n-uplet de rang i dans le cryptogramme **C**. Le chiffrement et le déchiffrement s'opèrent n-uplet par n-uplet en appliquant, par exemple pour le chiffrement, un XOR entre le n-uplet calculé par $p^j(o(i))$ et le n-uplet $n_i$. Il n'est pas nécessaire de calculer la nouvelle clé $K^j$ en totalité pour chiffrer ou déchiffrer.

Autre exemple : le mode de chiffrement est le mode ECB . Les bits d'un message binaire M de n bits sont permutés par une permutation $p$ de {1,......,n} qui est la clé secrète K .On définit ici aussi une fonction **o** qui associe à chaque entier de {1,......,n} le bit de M correspondant à son rang dans M. Par exemple , si M = 0110 alors $o$(1) = 0, $o$(2) = 1, $o$(3) = 1, $o$(4) = 0. La clé K est construite selon le procédé ci-dessus . Le chiffrement est alors effectué par la fonction $c_i = o(p^j(i))$, où $c_i$ est le bit de rang i du cryptogramme , puisque l'opération de permutation de symboles d'une suite S de symboles par une permutation de {1,......,n} est donnée mathématiquement par $b(p(i))$, où $p$ est la bijection de {1,......,n} dans {1,......,n} qui définit la permutation homonyme $p$, et $b$ la fonction qui définit l'ordre de S (qui est donc ici **o**, voir § 8, section **a**) : « Formule de permutation d'une suite»).

Le déchiffrement s'opère par $b_i = o'(p^{-j}(i))$ où $b_i$ est le bit de rang i de M et **o'** la fonction qui associe à chaque entier de {1,......,n} le bit du cryptogramme **C** correspondant à son rang dans **C** pour définir l'ordre des bits de **C**.

Ces deux exemples sont très simples mais d'autres systèmes plus complexes intégrant comme dispositif un procédé de construction de la clé secrète à l'aide d'une structure algébrique ($S_e$, o) pour générer des ensembles de clés jetables constituées d'un sous-groupe cyclique **G** de ($S_e$, o) peuvent être conçus.

- §2 : Authentification par défi-réponse

Une autre utilisation cryptographique des structures algébriques de groupe de type ($S_e$, o) et de leurs sous-groupes cycliques **G** est l'authentification par défi-réponse dans le cas où de nombreux solliciteurs s'authentifient auprès d'un vérificateur unique selon un système symétrique. C'est le cas par exemple de l'authentification à distance d'une carte bancaire par un contrôleur central. Dans l'application précédente les clés secrètes de chiffrement jetables étaient associées à une information publique qui permettait que la clé de chiffrement soit modifiée pour chaque chiffrement de message. Dans l'authentification par défi-réponse dont il est question ici les permutations , c'est à dire les clés, composant le sous-groupe cyclique **G** du groupe symétrique $S_e$ ne sont plus des clés jetables mais des clés secrètes privées distribuées aux solliciteurs ; et l'information sous forme d'entier j ou de w-uplet $w$, une clé « publique ». Chaque solliciteur , qu'on peut aussi appeler usager ,est ainsi doté d'un couple de clé de type « publique / privée » qui permet que le vérificateur central n'ait pas à stocker les clés secrètes de chaque solliciteur . On décrit ci-après le fonctionnement de ce protocole à partir de deux modes de réalisation de l'invention.

**1er mode de réalisation (cas où la clé publique est un entier j):**

Le contrôleur central choisit :

- un ensemble E de symboles ou blocs de symboles , de grand ordre (cardinal),
- une permutation $p$ appartenant à $S_e$ composée de nombreux disjoints,
- le « w-uplet » $w$ de $p$ constitué des premiers éléments de chaque cycle de $p$

$p$ est la « clé-mère » secrète détenue par le contrôleur central. Cette clé-mère sert à fabriquer les couples de clé distribués aux solliciteurs. Le w-uplet élément des disjoints de $p$ est choisi constant et identique pour chaque solliciteur et ce dernier en a connaissance.

Les couples de clés délivrés aux solliciteurs sont alors conçus et fabriqués de la manière suivante . Pour chaque solliciteur le contrôleur central choisit un entier **j** de manière aléatoire mais différent pour chaque usager et calcule $p^j$:

- $p^j$ est alors la clé secrète $k$ propre à chaque solliciteur (par exemple inscrite dans la partie illisible de la puce pour une carte bancaire) à laquelle est joint le w-uplet $w = (i_1, i_2,......,i_w)$ qui est constitué des premiers éléments de chaque cycle de $p$.
- $j$ est la clé publique de chaque solliciteur .

Chaque carte possède alors un couple de clé « publique/privée » de type (j, $k = p^j$) qui est unique et donc qui lui est propre si le sous-groupe cyclique **G** de permutations généré par la clé-mère $p$ est de grand cardinal .Lors d'une authentification à distance le centre de contrôle envoie au solliciteur un entier aléatoire h. La carte pour relever le défi doit alors calculer $k^h$ ($i_k$) pour chaque $i_k$ de w. (La valeur de la fonction $k^h$ pour l'argument $i_k$). La valeur obtenue y est une suite de symboles ou blocs de symboles de E qui constitue la réponse au défi.De son côté le centre de contrôle prend connaissance de la clé publique j du solliciteur et calcule de même $p^{j \times h}$ ($i_k$) pour chaque $i_k$ de w puisque $k^h = (p^j)^h = p^{j \times h}$. S'il retrouve y cela prouve que la carte est authentique car cela signifie que sa clé secrète est bien $p^j$ qui a été fabriquée et attribuée par le vérificateur central.

**Avec cette méthode le centre de contrôle n'a pas à connaître et stocker les clés secrètes de chaque solliciteur. La valeur y de contrôle est calculée par le centre de contrôle uniquement à partir de la clé-mère $p$ qui est secrète et détenue uniquement par lui et de la clé publique j du solliciteur.**

Exemple :

Le contrôleur central choisit ici un ensemble E composé de n-uplets de bits choisis aléatoirement (c'est à dire qu'ils sont de longueur aléatoire , ce ne sont donc plus les élément d'un ensemble de type $\{0,1\}^n$). Pour des raisons pratique de calcul on choisit E composé uniquement de 18 n-uplets de bits. Les disjoints de $p$ sont choisis de longueur 5 , 6 et 7. Soit E = {0011, 001, 11011 , 10110 , 11 , 0010 , 0000, 1100, 00001 , 010001 , 110111, 0110 , 01111 , 01001 , 100110, 10010, 110101, 00100}. Un ordre **o** sur E est aussi défini. Ici **o** est défini par l'ordre des n-uplets de E par lequel E est écrit : **0011 001 11011** etc, cela évite d'avoir à réécrire une seconde fois les éléments de E. Puis il choisit une permutation $p$ de E composée de plusieurs cycles. Exprimés sous forme de « puissances » de la fonction $p$ pour chaque premier élément des cycles (les éléments de base de chaque cycle pouvant être choisis au hasard) ces cycles sont par exemple :

$$C_1 = p^0(1100) = 1100 \quad p^1(1100) = 01111 \quad p^2(1100) = 0010 \quad p^3(1100) = 10010$$

$$p^4(1100) = 11 \quad p^5(1100) = 1100$$

$$C_2 = p^0(010001) = 010001 \quad p^1(010001) = 001 \quad p^2(010001) = 0011$$

$$p^3(010001) = 100110 \quad p^4(010001) = 110101 \quad p^5(010001) = 00100$$

$$p^6(010001) = 010001$$

$$C_3 = p^0(110111) = 110111 \quad p^1(110111) = 11011 \quad p^2(110111) = 10110$$

$$p^3(110111) = 01001 \quad p^4(110111) = 00001 \quad p^5(110111) = 0110$$

$$p^6(110111) = 0000 \quad p^7(110111) = 110111$$

Donc ici $w$ = (1100 010001 110111)

C'est à partir de cette clé-mère que le contrôleur central attribue les couples de clés « publique/privée » : Le contrôleur central choisit un entier j de manière aléatoire pour chaque usager. Puis il calcule la permutation $p^j$ qui sera la clé privée attribuée à l'usager solliciteur et qui sera donnée par exemple sous forme de « puissances » d'une bijection afin de pouvoir utiliser par exemple l'algorithme $\{p^a\} \to p^j$ pour les calculs lors de l'authentification.

Soit dès lors un usager à doter d'un couple de clés (j, $k = p^j$). Soit par exemple **j = 7292**. On peut vérifier que la clé privée $k = p^{7292}$ attribuée à l'usager est composée des quatre cycles suivants:

$$K_1 = \quad k^0(1100) = \mathbf{1100} \quad k^1(1100) = \mathbf{0010} \quad k^2(1100) = \mathbf{11} \quad k^3(1100) = \mathbf{01111}$$

$$k^4(1100) = \mathbf{10010} \quad k^5(1100) = \mathbf{1100}$$

$$K_2 = \quad k^0(010001) = \mathbf{010001} \quad k^1(010001) = \mathbf{0011} \quad k^2(010001) = \mathbf{110101}$$

$$k^3(010001) = \mathbf{010001}$$

$$K_3 = \quad k^0(001) = \mathbf{001} \quad k^1(001) = \mathbf{100110} \quad k^2(001) = \mathbf{00100} \quad k^3(001) = \mathbf{001}$$

$$K_4 = \quad k^0(110111) = \mathbf{110111} \quad k^1(110111) = \mathbf{0110} \quad k^2(110111) = \mathbf{01001}$$

$$k^3(110111) = \mathbf{11011} \quad k^4(110111) = \mathbf{0000} \quad k^5(110111) = \mathbf{00001} \quad k^6(110111) = \mathbf{10110}$$

$$k^7(110111) = \mathbf{110111}$$

L'usager sera donc doté , avec $w$ = (1100 010001 110111) qui est constant :

- de la clé privée $k$ , secrète.
- de l'entier **j = 7292** clé publique

Lors d'une authentification à distance le centre de contrôle envoie au solliciteur un entier **h** choisi de manière aléatoire, par exemple **h = 4589,** et demande au solliciteur de calculer $k^{4589}(\mathbf{1100})$, $k^{4589}(\mathbf{010001})$, $k^{4589}(\mathbf{110111})$, puisque $w$ = **(1100 010001 110111)**. Le vérificateur contrôle si le défi est relevé en calculant $p^{4589 \times 7292}(\mathbf{1100})$, $p^{4589 \times 7292}(\mathbf{010001})$, etc.

Variante :selon une variante du procédé le w-uplet $(i_1, i_2, ....., i_w)$ peut ne pas faire partie des données attribuées . Le centre de contrôle envoie alors par exemple au solliciteur un n-uplet quelconque **x** d'éléments de E ainsi que l' entier **h,** choisis de manière aléatoire, par exemple : **x = (11 00001 100110 10110)** et **h = 4589.** Le solliciteur calcule alors pour relever le défi:

$$k^{4589}(\mathbf{11}) = k^4(11) = k^4(k^2(1100)) = k^6(1100) = k^1(1100) = \mathbf{0010}$$

$$k^{4589}(\mathbf{00001}) = k^4(00001) = \ k^4(k^5(110111)) = k^9(110111) = k^2(110111) = \mathbf{01001}$$

$$k^{4589}(\mathbf{100110}) = k^2(100110) = k^2(k^1(001)) = \ k^3(001) = \mathbf{001}$$

$$k^{4589}(\mathbf{10110}) = k^4(10110) = k^4(k^6(110111)) = \ k^{10}(110111) = k^3(110111) = \mathbf{11011}$$

La valeur envoyée par l'usager au centre de contrôle est donc après concaténation **y = 00100100100111011** .

De son côté le centre de contrôle prend connaissance de la clé publique j = 7292 du solliciteur et calcule (à l'aide de **j**, **h** ,et de la seule permutation $p$ qu'il détient en tant que clé-mère): $p^{4589 \times 7292}(\mathbf{11}) = p^{33462988}(11) = p^3(11)$, puisque le cycle $C_1$ de la fonction $p$ est de longueur 5 et que 3 = 33462988 mod5,

$$p^3(11) = p^3(p^4(1100)) \, ,$$

voir cycle $C_1$ de $p$.

$$p^3(p^4(1100)) = p^7(1100) = p^2(1100) = \mathbf{0010}$$

etc..

Le centre de contrôle retrouve bien **y = 00100100100111011** et le solliciteur s'est donc authentifié.

**2nd mode de réalisation (cas où la clé publique est un w-uplet *w*):**

La clé-mère *p* est toujours composée de n-uplets de bits comme pour le 1er mode de réalisation mais doit être composée de disjoints dont les longueurs n'ont pas de diviseur commun du fait qu'on utilise dans ce mode l'algorithme $\{p^a\} \to \lambda$. Le contrôleur central dote alors chaque solliciteur :

- d'une <u>clé publique</u> *w* qui est un w-uplet ($w_1$, $w_2$,...$w_k$,.....$w_w$) élément du produit cartésien des disjoints de *p*, choisi de manière quelconque mais différent pour chaque usager (dans la pratique *w* peut être exprimé par le w-uplet d'entiers qui correspondent aux exposants « $n_k$ » de chaque $w_k$, c'est à dire les entiers $n_k$ tels que $w_k = p^{n_k}(c_{1k})$, voir l'exemple ci-dessous)
- d'une clé secrète *k* sous forme de permutation de n-uplets de bits, permutation appartenant au sous-groupe cyclique **G** de $S_e$ et associée à *w.*

Chaque clé secrète *k* et donc chaque clé publique *w* étant différente pour chaque carte (si le nombre de cartes à doter de couples de clés est inférieur à l'ordre **a** du groupe cyclique **G** engendré par *p* puisque le nombre de w-uplets possibles est égal à **a**).Lors d'une authentification le défi à relever par le solliciteur est par exemple de calculer y = *f*(**k,x**) en appliquant un « + » XOR sur les bits des n-uplets de *k* puis entre la valeur obtenue et le bit de **x** correspondant, **x** étant une suite de bits de même nombre que les n-uplets de *p*.

Exemple :

Soit par exemple une permutation de n-uplets de bits *p*, clé-mère , définie par :

$$p = (\ \overset{\mathbf{10001001}}{11110110} \quad \overset{\mathbf{101011000}}{001010101} \quad \overset{\mathbf{11110110}}{00110010} \quad \overset{\mathbf{00110010}}{11011101} \quad \overset{\mathbf{11011101}}{10001001} \quad \overset{\mathbf{110010001}}{101011000} \quad \overset{\mathbf{110101110}}{110010001}$$

$$\overset{\mathbf{010110111}}{110101110} \quad \overset{\mathbf{001010101}}{010110111}\ )$$

Sous forme de cycles ,*p* est définie par:

$$C_1 = \quad p^0(\mathbf{11011101}) = 11011101 \quad p^1(\mathbf{11011101}) = 10001001 \quad p^2(\mathbf{11011101}) = 11110110$$

$$p^3(\mathbf{11011101}) = 00110010 \quad p^4(\mathbf{11011101}) = 11011101$$

$$C_2 = \quad p^0(\mathbf{001010101}) = 001010101 \quad p^1(\mathbf{001010101}) = 010110111$$

$$p^2(\mathbf{001010101}) = 110101110 \quad p^3(\mathbf{001010101}) = 110010001$$

$$p^4(\mathbf{001010101}) = 101011000 \quad p^5(\mathbf{001010101}) = 001010101$$

Un usager est alors doté d'un couple de clé (*w,k*), par exemple :

- *w* = (11110110 101011000), clé publique , *w* pouvant être exprimé par le couple d' « exposants » *w* = **(2 , 4)** qui lui est associé en vue de l'application de l'algorithme $\{p^a\} \to \lambda$, le couple d'entiers est **(2 ,4)** car 11110110 = $p^2$(**11011101**) et 101011000 = $p^4$(**001010101**).

- **k** clé secrète calculée par $\{p^a\} \to \lambda$ associée à **w**, (**k** = $\lambda$), qui est :

$$k = (\ 00110010\ \ 110010001\ \ 11011101\ \ 10001001\ \ 11110110\ \ 110101110\ \ 010110111$$
$$00101010\ \ 101011000\ )$$

Si **x** = 110011101 la carte doit alors renvoyer:

-

$$00110010\ + 1 = 1 + 1 = \mathbf{0}$$

(XOR sur le premier n-uplet de **k**, puis avec le premier bit de **x** : (0+0+1+1+0+0+1+0) + 1 = **0** De même pour les autres n-uplets de **k** :

-

$$110010001 + 1 = 0 + 1 = \mathbf{1}$$

-

$$11011101\ + 0 = 0 + 0 = \mathbf{0}$$

et ainsi de suite pour les neuf n-uplets de bits de **k**.

Le contrôleur central quant à lui vérifie si le défi est relevé en prenant connaissance de **w**, puis puisque **k** = $\lambda$, en calculant $\lambda(i_j) + b_j$ avec l'algorithme $\{p^a\} \to \lambda$ pour chaque $i_j$ de E pris dans l'ordre de E, $b_j$ étant le bit de rang j danx **x**. Cela selon un chiffrement bit par bit sans avoir à stocker la clé secrète **k** de chaque carte et sans avoir à recalculer celle-ci. Il calcule ainsi par exemple pour le chiffrement du premier bit de **x**, avec $\{p^a\} \to \lambda$ et à partir uniquement de la clé publique **w** = (**2**, **4**) et des disjoints de p qu'il détient :

$$\lambda(\ 10001001) + 1 = p^2(\ 10001001) + 1\ ,$$

car 10001001 appartient à $C_1$ donc $n_k$ = **2**, puis :

$$p^2(\ 10001001)\ + 1 = p^2(p^1(11011101)) + 1 = p^3(\ 11011101) + 1 = 00110010 + 1 \ (\text{voir cycle } C_1)$$

Il retrouve bien alors

$$(0+0+1+1+0+0+1+0) + 1 = 1 + 1 = \mathbf{0}$$

Etc..

Note: l'utilisation d'un XOR a pour inconvénient que la connaissance de la valeur **y** = **f(k,x)**, qu'on peut appeler chiffre de la suite binaire **x**, révèle pour chaque bit de **x** comment celui-ci doit être chiffré . Un espion observant que x= 10 donne pour chiffre 00 par exemple , sait que 1 en premier dans x est chiffré par 0 , 0 en second est chiffré par 0 etc.. En observant les opérations d'authentification et notamment les valeurs de **y** il pourrait alors se faire passer pour un autre. Pour pallier à cet inconvénient un nouveau XOR peut être appliqué sur des n-uplets de **y** de longueur constante prédéterminée .Par exemple si **y** = **f(k,x)** = **011010**, un second XOR est appliqué sur les deux triplets de bits de **y** :

$$0 + 1 + 1 = \mathbf{0}$$

$$0 + 1 + 0 = \mathbf{1}$$

Et le chiffre de **x** est donc au final **Y = 01**

Avec cette technique l'espion sait que le premier triplet de **x** a pour chiffre **0**. Mais la probabilité que le premier triplet de **x** soit repris dans une autre donnée **x'** à chiffrer est plus faible que la reprise de 1 ou 0 qui est évidemment de 100% . Par ailleurs le découpage de **y** en n-uplets pour appliquer le second XOR peut être fait de manière à ce que ceux-ci soient de grande taille. Si le second XOR est appliqué sur des 10-uplets par exemple , la probabilité qu'un 10-uplet présent dans une donnée **x** soit aussi présente dans une autre donnée **x'** devient beaucoup plus faible . L'analyse en est alors rendue plus difficile.

Note sur la sécurité : Ce procédé d'authentification repose quant à sa sécurité sur le fait qu'il doit être impossible pour un usager de retrouver la clé-mère $p$ du contrôleur central à partir de son couple de clés (**w, k** = λ) ou (**j, k** = $p^j$). Sans quoi des couples de clé pourraient être créés par un usager à la place de l'autorité vérificatrice qui est seule habilitée à les fabriquer.

On répond que dans le cas des couples de clé (w , k) il semble impossible de retrouver p autrement que par une recherche exhaustive sur l'ensemble des permutations de E .La clé publique w, notamment si elle est exprimée sous forme de w-uplets d'entiers correspondants aux exposants « $n_k$ », ne donne en effet aucune information à l'usager : dans l'exemple l'usager qui connait **(2,4)** et **k** = (00110010 110010001 11011101 10001001 11110110 110101110 010110111 00101010 101011000) n'obtient aucune information ni sur la clé-mère $p$ (sauf sur le nombre de disjoints de $p$), ni sur l'élément du produit cartésien des disjoints de $p$ choisi par le contrôleur pour être sa clé publique **w.** Dans le cas où les couples de clés sont de de type (**j** , $p^j$) il peut parfois être possible si $p^j$ est connu de retrouver $p$ à partir de **j** et $p^j$, notamment si l'entier **j** est un nombre premier (mais on note cependant que dans le cas d'une carte bancaire , par exemple , la clé privée $p^j$ figure dans la partie illisible de la puce et n'est donc pas en théorie accessible). On ne développe pas ici ce point de cryptanalyse. On mentionne simplement une technique pour pallier à cet inconvénient de sécurité.Dans le cas où la clé publique est un entier **j** il suffit au contrôleur central de construire la clé privée de l'usager non plus à partir d'une permutation $p$ de E mais à partir de deux clés-mères $p$ et $q$ . Ces deux permutations ne doivent pas commuter par l'opération de composition de fonction.La clé privée de l'usager est alors la composée de $p^j$ et $q^j$ c'est à dire ($p^j$ **o** $q^j$). Les couples de clés « publiques/privées « sont alors de la forme (**j,** ($p^j$ **o** $q^j$)). Dans ce cas de figure l'usager connaissant **j** et ($p^j$ **o** $q^j$) ne peut retrouver les bijections $p^j$ et $q^j$ que par une recherche exhaustive sur l'ensemble des permutations appartenant à $S_e$. En effet l'usager doit alors résoudre une équation de type $x$ o $y$ = $f$ (ici $f$ = ( $p^j$ **o** $q^j$)), avec $f$ une bijection connue et $x$ et $y$ deux bijections inconnues définies sur un ensemble E de cardinal n. Or dans ce cas l'équation $x$ o $y$ = $f$ possède n! couples ($x,y$) de solutions (voir section **a**), § 7). On aborde maintenant un autre procédé d'authentification dans lequel l' utilisation du dispositif objet de l'invention est possible. C' est la signature numérique.

- §3 : Signature numérique

Le procédé de signature numérique dont il est question ici dérive du procédé d'authentification par défi-réponse qui vient d'être exposé. Comme ce dernier il est destiné aux situations où les solliciteurs , appelés ici signataires, s'authentifient toujours par signature auprès de l'autorité vérificatrice qui détient la clé-mère. Mais l'autorité vérificatrice comme dans le procédé d'authentification par défi-réponse n'a jamais besoin de stocker les clés privées de chaque signataire . Elle vérifie chaque signature uniquement à partir de la clé publique de chaque signataire et de la/les clés-mères , sans avoir à stocker chaque clé privée de chaque signataire. Le procédé est par ailleurs un système utilisant des clés jetables en ce sens que chaque clé de signature est changée pour chaque signature.Les couples de clé « publique/privées » sont construits de la même manière que pour l'authentification par défi-réponse . La différence est simplement ensuite que la valeur **x** de défi, envoyée par le contrôleur central dans le procédé d'authentification est ici le document M à chiffrer pour produire la signature.

Le meilleur mode de réalisation est de fabriquer les couples de clés « publiques/privées » à partir de deux clés-mères $p$ et $q$ pour plus de sécurité. Le vérificateur central fabrique des couples de clés qui sont donc de la forme (**j, $k$ = ($p^j$ o $q^j$)**) et les calculs se font avec l'algorithme {$p^a$} → $p^j$. Une étape supplémentaire est cependant effectuée : la permutation ($p^j$ o $q^j$.) est transformée en permutation à disjoints multiple . Cela de la manière suivante : Si par exemple $k$ = ($p^j$ o $q^j$) = (**6 1 12 5 9 8 3 2 10 11 7 4**) qui est une permutation des douze premiers entiers naturels , on « découpe $k$ » en morceaux afin de créer un nombre maximal de disjoints, chaque morceau de $k$ étant considéré comme le disjoint d'une nouvelle permutation $K$. Ainsi $k$ devient la permutation $K$ = (**6 1 12**) (**5 9 8 3 2**) (**10 11 7 4**) qui est ici exprimée sous forme de disjoints.

Sous forme de permutation elle est : $K$ = (**12 5 2 10 9 1 4 3 8 11 7 6**).

Le signataire est alors doté du couple de clé (**j, $K$**) exprimée sous forme de cycles ou sous forme de permutations suivant le type de chiffrement utilisée .La transformation de ($p^j$ o $q^j$) en permutation à disjoints multiple en nombre maximal a pour but de se doter d'une clé générant un sous-groupe cyclique $G$ de $S_e$ de cardinal maximal dans lequel seront prises les clés jetables.

Lors d'une signature d'un document M l'usager U choisit un entier quelconque $h$ pour modifier sa clé secrète $K$ qui devient $K^h$. Il signe alors par le triplet (**h , j , $c_h$(M)**) où $c_h$(M) est le chiffre de M avec la clé $K^h$. Le vérificateur vérifie la signature en chiffrant M avec la permutation (**t($p^j$ o $q^j$))$^h$** où **t($p^j$ o $q^j$)** est la transformée de ($p^j$ o $q^j$) en permutation à cycles multiples , c'est à dire la clé secrète $K$ de l'utilisateur , ceci uniquement à partir de $p$ , $q$ , j et h. S'il retrouve M la signature est authentique.

- §4 : Authentification de documents

Un dernier type d'authentification intégrant le dispositif objet de l'invention est celui de l'authentification de documents. On entend par authentification de documents une situation dans laquelle une autorité où une personne habilitée délivre des documents à des usagers ou clients, lesquels documents confèrent à ces usagers ou clients des droits auprès de tiers. Le document doit être authentique en ce sens qu'il doit être délivré par l'autorité centrale seule habilitée à les délivrer. L'authentification des documents auprès de tiers est alors faite par des procédés de cryptographie qui permettent d'authentifier ces documents (c'est à dire qui permettent de prouver que ces documents ont été délivrés par l'autorité habilitée). Le cas classique est celui de l'authentification d'une carte bancaire lors d'un paiement internet . Lors d'un achat sur internet l'acheteur doit entrer son numéro de carte bancaire **N** et ce qu'on appelle en général le « cryptogramme visuel » , qu'on note ici **C** , et qui est le plus souvent un nombre de trois ou quatre chiffres. Le cryptogramme visuel est fonction du numéro de carte car il résulte du chiffrement de ce dernier à l'aide d'outils cryptographiques qui sont propres à chaque banque et tenus secrets. De tels outils peuvent être constitués d'un algorithme qui appliqué à **N** donne **C**, ou d'un algorithme et d'une clé de chiffrement pour chiffrer **N** à l'aide de la clé.

L'authentification de la carte de l'acheteur (c'est à dire le fait pour le vendeur d'être certain que la carte a bien été délivrée par la banque de l'acheteur dans laquelle ce dernier a bien un compte , fait qui garantit le paiement) est alors menée de la manière suivante : le vendeur , à qui la banque a délivré l'accès à un moyen de calcul , ou éventuellement l'autorité vérificatrice vers laquelle est redirigée l'autorisation de paiement, calcule le chiffre du numéro de carte **N.** S'il retrouve par ce chiffrement le cryptogramme **C** cela prouve que la carte est authentique , c'est à dire qu'elle a bien été délivrée par la banque émettrice de la carte , car seule cette dernière détient les outils cryptographiques qui ont permis de construire le couple **(N,C)** . Schématiquement, si l'on appelle $f$ l'algorithme de chiffrement, le vérificateur vérifie que $f(\mathbf{N}) = \mathbf{C}$. Si une clé secrète **k** est utilisée , si $f(\mathbf{N},\mathbf{k}) = \mathbf{C}$.

L'utilisation de la structure alébrique de groupe $(S_e, o)$, d'un sous-groupe cyclique **G** de $S_e$, et des algorithmes $\{p^a\} \rightarrow p^j$ ou $\{p^a\} \rightarrow \lambda$ se fait alors de la façon suivante :
La banque ou l'entité vérificatrice qui fabrique les numéros d'authentification choisit:

- un ensemble E de grand ordre (cardinal), composé de symboles ou blocs de symboles.
- une permutation **$p$** appartenant à $S_e$ composée de nombreux disjoints (on note w le nombre de disjoints)
- un n-uplet d'éléments E, choisi de préférence pour simplifier les calculs parmi les w-uplets **w** qui composent le produit cartésien des disjoints de $p$, chacun des éléments $i_1, i_2 ,......,i_w$ de **w** étant par ailleurs posé comme premier élément du disjoint (cycle) auquel il appartient (les premiers éléments de chaque cycle sont choisis de manière aléatoire par l'entité vérificatrice).

E, **$p$,** et **w** = $(i_1, i_2 ,......,i_w)$, constituent la clé secrète , qui est détenue uniquement par l'entité qui fabrique les numéros d'authentification **(N,C)** . E est secret en ce sens que son cardinal est secret. De même $p$ est secrète : le nombre de ses disjoints , la composition de ces derniers et leur longueur sont seuls connus de l'entité vérificatrice. On appelle ces données secrètes « clé-mère » car c'est à partir de ces données que vont être construits tous les couples d'authentifiants **(N,C)** qui seront attribués aux cartes . Les couples **(N,C)** sont construits de la manière suivante . Soit par exemple une carte bancaire à doter de couples d'authentifiants. La banque choisit :

- un entier **j** choisi de manière aléatoire (mais composé de quelques chiffres seulement : trois ou quatre chiffres)
- puis calcule le w-uplet : **N** = $(p^j(\mathbf{i_1}), p^j(\mathbf{i_2}),....p^j(\mathbf{i_w}))$ qui est une suite de symboles ou blocs de symboles de E. Les calculs s'effectuant avec l'algorithme $\{p^a\} \rightarrow p^j$.

La suite **N** , éventuellement concaténée , est apposée sur la carte et constitue le numéro de carte . Le couple **(N,j)** est le couple d'authentifiants attribué à la carte CB par la banque et donc **C = j.**

**N** est est inscrit sur la carte . **j** peut par ailleurs être le code secret à quatre chiffre de l'utilisateur (code PIN) et ne pas être inscrit sur la carte. Ensuite lors d'un paiement par internet l'utilisateur entre son numéro de carte **N** qui figure écrit sur cette dernière ainsi que son code secret **j** .Le moyen de calcul auquel a accès le vendeur , qui est délivré par la banque ou l'autorité vérificatrice qui détient les composants de la clé-mère secrète ,à savoir le w-uplet $(\mathbf{i_1},\mathbf{i_2},......,\mathbf{i_w})$ et la fonction **$p$**, calcule à partir de l'entier j donné par l'utilisateur les valeurs $p^j(\mathbf{i_1})$, $p^j(\mathbf{i_2})$,.... $p^j(\mathbf{i_w})$, avec la première clause de l'algorithme $\{p^a\} \rightarrow p^j$. Si le calcul donne **N** , les données **(N , j)** fournies par l'utilisateur sont authentiques. Donc la carte est authentique (carte délivrée par la banque ou l'entité vérificatrice).Chaque carte délivrée par l'entité vérificatrice peut ainsi être dotée d'un couple d'authentifiants personnel . Pour chaque entier **j** inférieur à **a** , le couple **(N , j)** est unique . **j** peut être choisi aléatoirement.**N** est fonction de **j. j** peut être secret.

Avec l'algorithme $\{p^a\} \rightarrow \lambda$ le dispositif est le suivant :

La banque choisit une permutation $p$ d'un ensemble E de la manière décrite ci-dessus mais dont les disjoints sont de longueurs n'ayant pas de diviseur commun. Puis pour chaque carte un w-uplet $w$ du produit cartésien des disjoints de la permutation $p$ engendrant le sous-groupe cyclique **G** est choisi pour constituer le numéro de carte **N** .Le cryptogramme **C** est ensuite construit en calculant la permutation $\lambda$ appartenant à **G** , ou en calculant seulement quelques éléments de la permutation $\lambda$ qui vont constituer **C** .Les authentifiants sont donc ici de type (**N** , **C**) avec **N** = $w$ et **C** = $\lambda$ . Lors d'un paiement par internet le détenteur de la carte donne **N** et **C** , le moyen de calcul dont dispose le commerçant vérifie par l'algorithme {S$^a$}$\to \lambda$ la cohérence du couple (N,C) . Si la réponse est positive la carte est authentique car cela prouve qu'elle a été conçue par la banque ou l'autorité qui détient la clé génératrice secrète $p$

- §5 : Chiffrement par carré latin

La dernière application cryptographique , indépendante des précédentes , mais dans laquelle peut être intégré un dispositif de chiffrement et de fabrication de la clé secrète à partir de la structure algébrique ($S_e$, o) et de ses sous-groupe cycliques **G** est le chiffrement par carré latin , appelé aussi chiffrement associé à un carré latin L. On renvoie ici au passage concernant la technique existante , page 3, pour la définition mathématique du carré latin et les techniques existantes utilisant un carré latin comme clé secrète de chiffrement. Dans l'invention ici exposée le chiffrement symétrique associé à un carré latin est tel que le carré latin qui est dans la technique existante défini par une matrice , c'est à dire un tableau de symboles de n lignes et n colonnes , pour un carré latin d'ordre n , n'est plus donné sous forme de matrice ou de tableau de symboles mais sous forme de permutation de symboles . Cette dernière ayant la propriété de ne posséder qu'un seul cycle (disjoint). Il n'est plus alors nécessaire pour chiffrer que le carré latin soit donné sous forme de tableau. Cela repose sur le résultat mathématique suivant : Soit E un ensemble quelconque de symboles d'ordre (cardinal) n , $p$ une permutation appartenant au groupe symétrique $S_e$ **constituée d'un seul cycle.** Alors le sous-groupe cyclique **G** de $S_e$, engendré par $p$ , et donc défini par **G** = {$p, p^2 , ... p^j,....,p^n$}, est un carré latin d'ordre n.On ne démontre pas ce résultat qui est une donnée purement mathématique.

Exemple : Soit E = {0,1}$^3$ l'ensemble des triplets de bits. $S_e$ l'ensemble des permutations de E , c'est à dire l'ensemble des permutations des huit triplets de bits. Soit une permutation $p$ appartenant à $S_e$ définie par $p$ = (101 011 110 000 111 100 001 010) avec l'ordre sur E défini par o = (**001 101 010 100 110 111 000 011).**

Donc avec ses « numéros d'ordre »

$$
\begin{array}{cccccccc}
001 & 101 & 010 & 100 & 110 & 111 & 000 & 011 \\
p = 101 & 011 & 110 & 000 & 111 & 100 & 001 & 010
\end{array}
$$

$p$ est donc composé d'un seul cycle C qui est, avec **110** pris comme premier élément du cycle:

$$C = p^0(110) = 110 \quad p^1(110) = 111 \quad p^2(110) = 100 \quad p^3(110) = 000 \quad p^4(110) = 001$$

$$p^5(110) = 101 \quad p^6(110) = 011 \quad p^7(110) = 010 \quad p^8(110) = 110$$

On peut dès lors vérifier que $p$ engendre un sous-groupe cyclique **G** de permutations appartenant à $S_e$ qui est :

| | | | | | | | | | |
|---|---|---|---|---|---|---|---|---|---|
| **001** | **101** | **010** | **100** | **110** | **111** | **000** | **011** | = | **o** |
| 101 | 011 | 110 | 000 | 111 | 100 | 001 | 010 | = | $p^1$ |
| 011 | 010 | 111 | 001 | 100 | 000 | 101 | 110 | = | $p^2$ |
| 010 | 110 | 100 | 101 | 000 | 001 | 011 | 111 | = | $p^3$ |
| 110 | 111 | 000 | 011 | 001 | 101 | 010 | 100 | = | $p^4$ |
| 111 | 100 | 001 | 010 | 101 | 011 | 110 | 000 | = | $p^5$ |
| 100 | 000 | 101 | 110 | 011 | 010 | 111 | 001 | = | $p^6$ |
| 000 | 001 | 011 | 111 | 010 | 110 | 100 | 101 | = | $p^7$ |
| **001** | **101** | **010** | **100** | **110** | **111** | **000** | **011** | = | $p^8$ |

Ce tableau composé de huit lignes et huit colonnes de triplets de bits est un carré latin. Chaque triplet de {0,1}$^3$ ne figure qu'une seule fois sur chaque ligne et qu'une seule fois sur chaque colonne.

Utilisation pour un système de chiffrement symétrique:

Selon la technique existante le chiffrement associé à un carré latin L qui associe au symbole i du message de rang j dans M, le symbole du carré latin figurant (colonne i , ligne j), noté par exemple $a_{ij}$, ou L(i,j) se fait par la fonction de chiffrement E définie par E($i_j$) = L(i,j). Le carré latin L doit donc être donné sous forme de matrice. Soit par exemple M = 011001 . Messages et cryptogrammes sont considérés comme des suites de triplets de bits. Les symboles qui sont chiffrés sont donc des triplets de bits . En utilisant le tableau ci-dessus et la fonction de chiffrement E définie par E($i_j$) = L(i,j) pour chiffrer le premier élément de M qui est 011 , on obtient : E (011) = l'élément du carré latin L figurant ligne 1 colonne 011 , donc **010**. Idem pour le second triplet de M qui a pour chiffre **011** . Dès lors :soit $p$ une permutation des éléments d'un ensemble E n'ayant qu'un seul cycle . $p$ engendre un sous-groupe cyclique **G** de $S_e$ qui est un carré latin . Le chiffrement symétrique associé au carré latin **G** et défini par E($i_j$) = **G**(i,j) peut être mené par la fonction de chiffrement **E($i_j$)** = $p^j$**(i)**, où $p$ est la bijection à cycle unique de E dans E qui définit la permutation homonyme $p$, cela sans que soit construite la matrice **G** sous forme de tableau. La fonction $p^j$**(i)** donne en effet l'élément de **G** qui figure en position "i" dans la permutation $p^j$ figurant ligne j du tableau. La fonction de déchiffrement **D** est l'inverse de la fonction de chiffrement : **D($i_j$) = p$^{-j}$(i)** où $i_j$ est ici l'élément de rang j du cryptogramme.

Ainsi dans notre exemple : E (011) = $p^1$**(011)** = $p^1$**($p^6$(110))** = $p^7$**(110)** = **010** , et E (001) = $p^2$(001) = $p^2$($p^4$(110)) = $p^6$ (110) = **011**. On retrouve bien le chiffre de M= 011001 que l'on a ci-dessus établi à partir du carré latin sous forme de tableau visuel.Seuls sont donc utilisés le cycle unique de $p$ défini ci-dessus et l'algorithme $\{p^a\} \to p^j$. Des carrés latin de grand ordre peuvent ainsi être représentés par une permutation à cycle unique et des chiffrement symétriques par carré latin être facilement conçus sur des carrés latins de grand ordre sans construire le carré latin sous forme de matrice ou tableau «visuel». Si E = $\{0,1\}^8$, par exemple , définir une permutation à cycle unique des 256 huit-uplets de bits qui composent E permet aussi de définir un carré latin d'ordre 256 (256 lignes et 256 colonnes) défini sur des huit-uplets de bits. De même si E = $\{1,2,..........,100\}$ un carré latin défini sur les cent premiers entiers naturels peut être facilement défini par le choix d'une permutation à cycle unique des cent premiers entiers naturels.

Une permutation à cycle unique d'un ensemble E quelconque est par ailleurs très facile à construire : on choisit de manière aléatoire un élément de E qui est élément de base du cycle , par exemple si E = $\{0,1\}^3$ on prend 110 , et on pose $p^0$(110) = 110 , puis pour $p^1$(110), on choisit de manière tout aussi aléatoire aléatoire un élément de E parmi les neuf restants de E , ex : 100 , et on pose p$^1$(110) = 100 , puis pour valeur de $p^2$(110) un élément au hasard parmi les huit restants de E , par ex 000 et on pose $p^2$(110) = 000, etc.. Un chiffrement par carré latin permet que la probabilité que deux éléments identiques de M soit chiffrés par un même symbole soit faible.

Le meilleur mode de réalisation de ce chiffrement est de se doter , en plus de la permutation à cycle unique définissant le carré latin , d'une seconde clé secrète sous forme de permutation d'entiers , ex: (6 4 2 3 8 7 9 10 1 5), dans laquelle sont pris pour chiffrer , successivement et par tour, les exposants **j** des fonctions de chiffrement ou déchiffrement $p^j$**(i)** et p$^{-j}$**(i)** ; au lieu que ces derniers soient le rang dans le message M ou le cryptogramme C du symbole à chiffrer ou déchiffrer. Par exemple en prenant comme seconde clé secrète $q$ = (6 4 2 3 8 7 9 10 1 5), permutation des dix premiers entiers , le premier symbole $i_1$ de M est chiffré par $p^6$($i_1$), le second $i_2$ par $p^4$($i_2$), le troisième $i_3$ par $p^2$($i_3$),....., etc, puis arrivé au onzième symbole $i_{11}$ de M on revient au début de $q$ pour chiffrer $i_{11}$ par $p^6$($i_{11}$).L'ajout d'une seconde clé secrète $q$ au système permet de masquer l'exposant de la fonction de chiffrement $p^j$($i_j$). La seconde clé secrète d'entiers $q$ pouvant par ailleurs , si elle est conçue de manière à être composée de nombreux disjoints , faire l'objet d'une modification à chaque message chiffré conformément à la méthode du §1 (communication avec le cryptogramme d'une information sous forme d'entier qui permet de changer l'ordre des éléments de $q$ à chaque envoi de message). Dans ce dernier cas les fonctions de chiffrement **E** et déchiffrement **D** peuvent être définies formellement de la manière suivante. Soit h l'entier choisi par l'émetteur du message pour modifier $q$, $S_j$ l'élément de M de rang j , $c_j$ l'élément du cryptogramme C de rang j , alors :

$$\mathbf{E}(s_j) = p^r(s_j).$$

$$\mathbf{D}(c_j) = p^{-r}(c_j)$$

avec r défini par :

r = $q^h$(j mod m), si (jmod m) # 0, où m est le nombre d'élément de $q$

r = $q^h$(m) sinon.

$p^r, p^{-r}$ et $q^h$ calculés par l'algorithme $\{p^a\} \to p^j$.

La suite ordonnée d'entiers dans laquelle sont pris les exposants des fonctions de chiffrement et déchiffrement est alors la permutation $q^h$.

**Revendications**

1. Cryptosystème symétrique utilisant une clé secrète de chiffrement **K** sous forme de suite finie aléatoire de symboles ou sous forme de permutation des symboles d'un ensemble E ordonné, par lequel l'émetteur d'un message ou d'une donnée crypté, ledit émetteur étant une carte bancaire, envoie avec un cryptogramme C une information **In** de manière publique , laquelle information **In** permet de modifier la clé secrète de chiffrement **K** à chaque envoi de message pour constituer un cryptosystème symétrique à clés jetables , **caractérisé par** le dispositif de fabrication de la clé **K** et des clés jetables défini ci-après:

   - en premier lieu, la clé de chiffrement **K** , si elle est sous forme de suite finie aléatoire de symboles, est d'abord conçue et construite de manière à ce qu'elle soit la concaténation d'une permutation **p** d'un ensemble ordonné E , par exemple si **K** est une suite binaire telle que **K** = 1010111 elle est découpée pour qu'elle soit une permutation d'un ensemble E de n-uplets de bits qui peut par exemple être défini par l'ensemble ordonné E = {11 101 10} ; une structure algébrique de groupe ($S_c$, $o$) est ainsi construite sur un ensemble E dont les éléments sont des blocs de symboles composant **K** , où $S_c$ est le groupe symétrique de E , ensemble des permutations de E définies par les bijections de E dans E associées à ces permutations , et $o$ l'opération de composition de fonction ,
   - en second lieu, la clé **K** sous forme de permutation **p** de blocs de symboles ainsi construite ou sous forme de permutation **p** de symboles composant un ensemble E ordonné , appelée clé-mère, est choisie de manière à être composée d'un grand nombre de cycles dont les longueurs , définies par le nombre d'éléments de chaque cycle , n'ont pas de diviseur commun : l'ensemble des permutations définies par $\{p^1, p^2,..,p^j,..,p^a\}$ est alors un sous-groupe cyclique **G** de $S_c$ , où l'entier **a** est le ppcm des entiers représentant la longueur des cycles et où $p^j$ est la bijection $p \, o \, p \, o.....o \, p$ avec l'opération $o$ de composition de fonction itérée j-1 fois,
   - puis en troisième lieu, pour chaque message à chiffrer l'émetteur choisit un entier quelconque **j**. C'est cet entier **j** qui est l'information **In** communiquée avec le cryptogramme C pour modifier la clé-mère **K.** L' émetteur du message ainsi que le receveur, ledit receveur étant un centre de contrôle, à réception du couple (C, j) calculent alors leur nouvelle clé de chiffrement **K'** qui est la permutation $p^j$ du sous-groupe-cyclique **G** de $S_c$ généré par **p**. Elle est ensuite concaténée si nécessaire. Ce calcul s'effectue par une fonction $f(\mathbf{j} , \mathbf{p})$ où $f$ est l'algorithme appelé $\{p^a\} \rightarrow p^j$, lequel est est défini par: Pour chaque élément i de E pris successivement selon l'ordre défini sur E , calculer $p^j(i)$ : si i est le premier élément d'un des cycles **C** de $p$ , alors $p^j(i) = p^r(i)$, avec $r \equiv$ j mod L, L étant la longueur du cycle **C** de i ; sinon chercher le cycle $C_k$, dont le premier élément est k, dans lequel figure i. Cela donne l'entier x tel que $p^x(k) = i$ qui est donné par le cycle $C_k$. Calculer ensuite le reste r de $(j + x)/L_k$, $L_k$ étant la longueur du cycle $C_k$. On obtient alors : $p^j(i) = p^r(k)$, avec $r \equiv$ (j + x)mod $L_k$.

2. Cryptosystème symétrique utilisant une clé secrète de chiffrement **K** sous forme de suite finie aléatoire de symboles ou sous forme de permutation des symboles d'un ensemble E ordonné , par lequel l'émetteur d'un message ou d'une donnée crypté, ledit émetteur étant une carte bancaire, envoie avec un cryptogramme C une information **In** de manière publique , laquelle information **In** permet de modifier la clé secrète de chiffrement **K** à chaque envoi de message pour constituer un cryptosystème symétrique à clés jetables , **caractérisé par** le dispositif de fabrication de la clé **K** et des clés jetables défini ci-après:

   - en premier lieu, la clé de chiffrement **K** , si elle est sous forme de suite finie aléatoire de symboles, est d'abord conçue et construite de manière à ce qu'elle soit la concaténation d'une permutation **p** d'un ensemble ordonné E , par exemple si **K** est une suite binaire telle que **K** = 1010111 elle est découpée pour qu'elle soit une permutation d'un ensemble E de n-uplets de bits qui peut par exemple être défini par l'ensemble ordonné E = { 11 101 10}; une structure algébrique de groupe ($S_c$, $o$) est ainsi construite sur un ensemble E dont les éléments sont des blocs de symboles composant **K** , où $S_c$ est le groupe symétrique de E , ensemble des permutations de E définies par les bijections de E dans E associées à ces permutations , et $o$ l'opération de composition de fonction ,
   - en second lieu, la clé **K** sous forme de permutation **p** de blocs de symboles ainsi construite ou sous forme de permutation **p** de symboles composant un ensemble E ordonné , appelée clé-mère, est choisie de manière à être composée d'un grand nombre de cycles dont les longueurs , définies par le nombre d'éléments de chaque cycle , n'ont pas de diviseur commun : l'ensemble des permutations définies par $\{p^1, p^2,.., p^j,..,p^a\}$ est alors un sous-groupe cyclique **G** de $S_c$ , où l'entier **a** est le ppcm des entiers représentant la longueur des cycles et où $p^j$ est la bijection $p \, o \, p \, o.....op$ avec l'opération $o$ de composition de fonction itérée j-1 fois,

- en troisième lieu, en notant $w$ le nombre de cycles de $p$, et $C_1$, $C_2$, .....,$C_w$ ces cycles , un w-uplet $w$ du produit cartésien $C_1$ x $C_2$ x .....x $C_w$ est choisi de manière aléatoire par l'émetteur du message , c'est ce w-uplet w qui est l'information **In** communiquée avec le cryptogramme,

- l'émetteur pour chiffrer son message, ainsi que le receveur, ledit receveur étant un centre de contrôle, à réception du couple (C,**In**),

calculent alors leur nouvelle clé **K'** de chiffrement par une fonction de calcul $f(w , p)$ où $f$ est l'algorithme appelé $\{p^a\}$ - $\lambda$, lequel calcule à partir de $w$ et $p$ exprimée sous forme de cycles la permutation $\lambda$ appartenant à **G** et associée à $w$ ; $\lambda$ est alors la nouvelle clé **K'** . Elle est ensuite concaténée si nécessaire. L' algorithme $\{p^a\} \rightarrow \lambda$ étant défini par :

Soit $w = (w_1 , w_2 , ...w_j,.....w_w)$ un w-uplet de $C_1$ x $C_2$ x...x $C_j$ x...... $C_w$. Soit $c_{11}$, l'élément de base du cycle $C_1$, $c_{12}$ l'élément de base du cycle $C_2$,.....,$c_{1j}$ l'élément de base du cycle $C_j$,....,$c_{1w}$ l'élément de base du cycle $C_w$. Dès lors la permutation $\lambda$, donc la bijection $\lambda$ de E dans E , appartenant à **G** et associée à $w$ est calculée en cherchant la valeur $\lambda(i)$ pour chaque i de E pris successivement selon l'ordre sur E, cela de la manière suivante:

- si i = $c_{1j}$, pour $1 \le j \le w$, c'est à dire si i est un des éléments de base des cycles de $p$ , alors $\lambda(i)= \lambda(c_{1j}) =W_j$,
- sinon si i $\neq c_{1j}$ pour tout j , on cherche le cycle $C_k$ de $p$ auquel i appartient. Cela donne le premier élément $c_{1k}$ du cycle $C_k$ ,$W_k$, et l'entier $n_k$ tel que $W_k = p^n{}_k(c_{1k})$ . On pose alors $\lambda(i)= p^n{}_k(i)$ avec $p^n{}_k(i)$ déterminé par: chercher dans le cycle $C_k$ l'entier x tel que $p^x(c_{1k})$ = i. Calculer ensuite le reste r de $(n_k + x)/L_k$, $L_k$ étant la longueur du cycle $C_k$ de i. On obtient alors : $p^n{}_k(i) = p^r\{c_{1k}\}$, avec $r \equiv (n_k + x)\bmod L_k$.

3. Procédé d'authentification par défi/réponse dans lequel plusieurs solliciteurs, lesdits solliciteurs étant des cartes bancaires, s'authentifient auprès d'un vérificateur unique, ledit vérificateur étant un centre de contrôle, en calculant une valeur $Y = g(k, x)$ à l'aide d'une clé secrète $k$ propre à chaque solliciteur et d'un algorithme de calcul $g$ selon un cryptosystème symétrique , $x$ étant une donnée communiquée par le vérificateur au solliciteur pour qu'il relève le défi qui consiste à calculer **Y** comme un cryptogramme calculé par un cryptosystème selon l'une des revendications 1 ou 2, défi qui prouve s'il est relevé que le solliciteur possède la clé secrète $k$ , ce qui l'authentifie ; **caractérisé en ce que** les clés jetables de type $p^j$ ou $\lambda$ sont ici les clés secrètes personnelles propres à chaque solliciteur , et 1' information publique **In** sous forme d'entiers j ou de w-uplet $w$ leurs clés publiques , chaque solliciteur étant ainsi doté d'un couple,de clés "publique-privée" de forme (j , $k = p^j$) ou (w, $k = \lambda$). Ces couples de clés étant fabriqués et attribués aux solliciteurs par le vérificateur à partir de la clé-mère $p$ que lui-seul détient de manière secrète ; ces couples étant uniques si **G** est de grand cardinal. Lors de la vérification le vérificateur recalcule la clé secrète personnelle $k$ du solliciteur à l'aide de la clé publique j ou $w$ du solliciteur et avec la méthode de calcul $\{p^a\} \rightarrow p^j$ ou $\{p^a\} \rightarrow \lambda$ .Il vérifie la réponse au défi sans qu'il soit nécessaire pour lui de stocker la clé secrète de chaque solliciteur.

4. Procédé d'authentification par défi-réponse selon la revendication 3 dans lequel chaque solliciteur est doté d'un couple de clé de type (j , $k = p^j$) fabriqué et attribué par le vérificateur **caractérisé en ce que** l'authentification s'opère par l'envoi au solliciteur d'une donnée **x** composée d'un entier aléatoire h et d'un n-uplet quelconque N = $(i_1,i_2,..,i_k,...,i_n)$ d'éléments de E , le n-uplet N selon une variante du procédé pouvant être constant et constitué des premiers éléments de chaque cycle de $p$ pour être attribué à chaque solliciteur comme complément du couple de clé. Le défi consistant pour le solliciteur à calculer $k^h(i_k)$ pour chaque $i_k$ appartenant à N , c'est à dire la valeur de la bijection $k^h$ pour chaque argument $i_k$. Le vérificateur vérifiant si le défi est relevé en calculant de son côté $p^{j \times h}(i_k)$ pour chaque $i_k$ appartenant à N après avoir pris connaissance de la clé publique **j** du solliciteur, cette vérification étant faite sans que le vérificateur ait besoin de stocker la clé privée de chaque solliciteur et sans que la clé $k$ du solliciteur soit recalculée. Ces calculs étant effectués par la méthode de calcul $\{p^a\} \rightarrow p^j$.

5. Procédé d'authentification par défi-réponse selon la revendication 3 dans lequel chaque solliciteur est doté d'un couple de clé de type $(w , k = \lambda)$ fabriqué et attribué par le vérificateur **caractérisé en ce que** l'authentification s'opère par l'envoi au solliciteur d'une donnée **x** sous forme de suite de bits communiquée par le vérificateur au solliciteur pour qu'il relève le défi, la clé $k$ de chaque solliciteur étant une permutation de n-uplets de bits de même nombre que les bits de **x**. Le calcul $g$ constituant le défi consistant à appliquer un XOR entre les bits de chaque n-uplet de $k$ et chaque bit de **x** pour donner une première valeur **y**, puis à appliquer un nouveau XOR sur les bits des n-uplets de **y** de longueur déterminée pour donner Y: ainsi par exemple si **x** = 010110 et $k$ = (1111 01 101 111 00 10) une première valeur **y** est constituée des six bits **001011** et est obtenue par : (1+1+1+1) + 0 = **0**, (0 + 1) + 1 = **0**, (1 + 0 + 1) + 1 = **1**, etc, un second XOR étant alors appliqué sur les n-uplets composant **y** = **001011**, n-uplets choisis par exemple ici de longueur 3 , ceci pour donner dans l'exemple la valeur finale **Y = 10,** puisque 0 + 0 + 1 = **1** et 0 + 1 + 1 = **0**. La vérification s'opérant par l'algorithme $\{p^a\} \rightarrow \lambda$ qui permet que le vérificateur n'ait pas à stocker ni recalculer la clé secrète personnelle $k$ de chaque solliciteur puisque le vérificateur obtient par cet algorithme chaque n-uplet de bits de $k$ en calculant $\lambda(e_j)$ à partir de $w$ et $p$, $e_j$ étant l'élément de rang j de l'ensemble ordonné E .

**Patentansprüche**

1. Symmetrisches Kryptosystem unter Verwendung eines geheimen Verschlüsselungsschlüssels **K** in Form einer zufällige endliche Folge von Symbolen oder in Form einer Permutation der Symbole einer geordneten Menge E . In diesem Protokoll überträgt die Person, die die verschlüsselte Nachricht oder die Daten sendet, auch Informationen, die öffentlich sind. Das Kryptogramm ist C und die Information ist **In.** Diese Information ermöglicht es, den geheimen Schlüssel **K** jeder Nachricht zu modifizieren, um ein symmetrisches Verschlüsselungssystem zu bilden, in dem die Schlüssel nur zum einmaligen Gebrauch bestimmt sind.

   Die Erfindung zeichnet sich durch eine Vorrichtung zur Konstruktion des Schlüssels **K** und zur Herstellung von Wegwerfschlüsseln aus, die wie folgt definiert ist:

   - Zunächst wird der Schlüssel **K,** wenn es sich um eine zufällige endliche Folge von Symbolen handelt, so konstruiert, dass er die Verkettung einer Permutation **p** einer geordneten Menge E ist. Zum Beispiel, wenn **K** eine binäre Sequenz ist, so dass **K** = 1010111 , der Schlüssel **K** so geschnitten ist, dass er zu einer Permutation einer Menge E wird, die aus Elementen besteht, die bitblöcken sind. Hier zum Beispiel kann E sein E = { 11 101 10} . Eine algebraische Gruppenstruktur ($S_e$, *o*) auf diese Weise auf einer Menge E aufgebaut ist, deren Elemente der Symbolblöcken sind, die **K** bilden . $S_e$ ist die symmetrische Gruppe von E, $S_e$ ist die symmetrische Gruppe von E, das heißt alle Permutationen der Elemente von E. Diese Permutationen werden durch die mit diesen Permutationen verbundenen Bijektionen von E in E definiert, und *o* ist der funktionskomposition.

   - zweitens wird der Schlüssel **K** , in Form einer Permutation **p** von so konstruierten Symbolblöcken oder in Form einer Permutation **p** von Symbolen, die eine geordnete Gruppe E bilden , ausgewählt, so dass er aus einer Vielzahl von Zyklen besteht . **K** wird als Mutterschlüssel bezeichnet. Die Länge eines Zyklus wird durch die Anzahl der darin enthaltenen Elemente definiert. Daher sind Zykluslängen ganze Zahlen. Diese ganzen Zahlen dürfen keinen gemeinsamen Divisor haben. Der durch {$p^1$, $p^2$,.., $p^j$,..,$p^a$} definierte Satz von Permutationen ist eine zyklische Untergruppe von $S_e$. Diese zyklische Untergruppe wird als **G** bezeichnet. In {$p^1$, $p^2$,.., $p^j$,..,$p^a$} ist die ganze Zahl **a** das kleinste gemeinsame Vielfache , kgV , der ganzen Zahlen, die die Länge der Zyklen repräsentieren . $p^j$ ist die Bijektion (*p o p o p ...p*) mit der Operation *o* wiederholt (j -1) mal.

   - Drittens, für jede zu verschlüsselnde Nachricht wählt der Absender eine beliebige ganze Zahl **j**. Es ist diese ganze Zahl **j,** die die Information **In** ist, die mit dem Kryptogramm C kommuniziert wird, um den Mutterschlüssel **K** zu ändern. Der Absender der Nachricht und der Empfänger nach Erhalt des Paares (C, **j**) berechnen dann ihren neuen Verschlüsselungsschlüssel **K'**. **K'** ist die Permutation $p^j$ der zyklischen Untergruppe **G** von Se, die durch *p* erzeugt wird. Sie wird dann bei Bedarf verkettet. Diese Berechnung erfolgt über eine Funktion *f*(**j** , **p**). *f* ist der Algorithmus namens {$p^a$} → $p^j$. Dieser Algorithmus wird definiert durch : Für jedes Element i von E, entsprechend der geordnet von E , $p^j$(i) wird wie folgt berechnet: wenn i das erste Element eines der Zyklen **C** von **p** ist, dann $p^j$(i) = $p^r$(i), r ≡ j mod L und L ist die Länge des Zyklus C, zu dem i gehört ; ansonsten suchen wir nach dem Zyklus $C_k$ dessen erstes Element ist k , in dem i erscheint.Wir erhalten also die ganze Zahl x so, dass $p^x$(k) = i, die durch den Zyklus $C_k$ gegeben ist. Berechnen Sie dann den Rest r von (j + x)/$L_k$. $L_k$ ist die Länge des Zyklus $C_k$.Wir erhalten dann :

$$p^j(i) = p^r(k) , \ r \equiv (j + x)\bmod L_k .$$

2. Symmetrisches Kryptosystem unter Verwendung eines geheimen Verschlüsselungsschlüssels **K** in Form einer zufällige endliche Folge von Symbolen oder in Form einer Permutation der Symbole einer geordneten Menge E . In diesem Protokoll überträgt die Person, die die verschlüsselte Nachricht oder die Daten sendet, auch Informationen, die öffentlich sind. Das Kryptogramm ist C und die Information ist **In.** Diese Information ermöglicht es , den geheimen Schlüssel **K** jeder Nachricht zu modifizieren, um ein symmetrisches Verschlüsselungssystem zu bilden, in dem die Schlüssel nur zum einmaligen Gebrauch bestimmt sind.

   Die Erfindung zeichnet sich durch eine Vorrichtung zur Konstruktion des Schlüssels **K** und zur Herstellung von Wegwerfschlüsseln aus, die wie folgt definiert ist:

   - Zunächst wird der Schlüssel **K,** wenn es sich um eine zufällige endliche Folge von Symbolen handelt, so konstruiert, dass er die Verkettung einer Permutation **p** einer geordneten Menge E ist. Zum Beispiel, wenn **K** eine binäre Sequenz ist, so dass K = 1010111 , der Schlüssel **K** so geschnitten ist, dass er zu einer Permutation einer Menge E wird, die aus Elementen besteht, die bitblöcken sind. Hier zum Beispiel kann E sein E = { 11 101 10} . Eine algebraische Gruppenstruktur ($S_e$, *o*) auf diese Weise auf einer Menge E aufgebaut ist, deren Elemente der Symbolblöcken sind, die **K** bilden . $S_e$ ist die symmetrische Gruppe von E, das heißt alle Permutationen der Elemente von E. Diese Permutationen werden durch die mit diesen Permutationen verbundenen Bijektionen von E in E definiert, und $o$ ist der funktionskomposition.

- zweitens wird der Schlüssel **K** in Form der Permutation $p$ von wie vorstehend beschrieben konstruierten Symbolblöcken oder in Form der Permutation $p$ von Symbolen, die eine geordnete Menge E bilden, so gewählt, dass er aus einer grossen Anzahl von Zyklen besteht. **K** wird als Mutterschlüssel bezeichnet. Die Länge eines Zyklus wird durch die Anzahl der darin enthaltenen Elemente definiert. Daher sind Zykluslängen ganze Zahlen. Diese ganzen Zahlen dürfen keinen gemeinsamen Divisor haben. Der durch $\{p^1, p^2,.., p^j..,p^a\}$ definierte Satz von Permutationen ist eine zyklische Untergruppe von $S_e$ . Diese zyklische Untergruppe wird als **G** bezeichnet. In $\{p^1, p^2,.., p^j..,p^a\}$ ist die ganze Zahl **a** das kgV der ganzen Zahlen, die die Länge der Zyklen repräsentieren . $p^j$ ist die Bijektion $(p \; o \; p \; o \; p \; ...p)$ mit der Operation $o$ wiederholt $(j -1)$ mal.

- drittens nennen wir $w$ die Anzahl der Zyklen von $p$, und $C_1, C_2, .....,C_w$ seine Zyklen , ein $w$-Tupel $w$, Element des kartesischen Produkts $C_1$ x $C_2$ x ...x $C_w$ wird vom Absender der Nachricht zufällig ausgewählt, es ist dieses $w$ , das die Information **In** ist. **In** wird mit dem Kryptogramm gesendet.

- der Absender, um seine Nachricht zu verschlüsseln, und der Empfänger der Nachricht nach dem Empfangen des Paares (C,**In**) berechnet seinen neuen Verschlüsselungsschlüssel **K'** durch eine Berechnungsfunktion $f(w , p)$. $f$ ist der Algorithmus namens $\{p^a\} \rightarrow \lambda$. Dieser Algorithmus berechnet aus $w$ und der Bijektion $p$ ausgedrückt in Zyklen die Permutation $\lambda$. Diese Permutation gehört zu **G** und ist mit $w$ verbunden. $\lambda$ ist der neue Schlüssel **K'** . Der Schlüssel **K'** wird dann bei Bedarf verkettet. Der Algorithmus $\{p^a\} \rightarrow \lambda$ wird definiert durch:

$w = (w_1, w_2, ...w_j,.....w_w)$ ist ein w-Tupel von $C_1$ x $C_2$ x .....x $C_w$. $c_{11}$ ist das Grundelement des Zyklus $C_1$, das heißt, das erste Element des Zyklus $C_1$; $c_{12}$ ist das Grundelement des Zyklus $C_2$; $c_{1j}$ ist das Grundelement des Zyklus $C_j$; $c_{1w}$ ist das Grundelement des Zyklus $C_w$. Die Permutation $\lambda$, das heißt , die Bijektion $\lambda$ von E in E, die zu **G** gehört und mit $w$ assoziiert ist, wird berechnet, indem man nach dem Wert $\lambda(i)$ für jedes i von E sucht . Jedes i von E wird nacheinander in der geordnet von E wie folgt genommen:

- Wenn $i = c_{1j}$, für $1 \leq j \leq w$, das heißt, wenn i eines der Grundelemente der Zyklen von $p$, dann $\lambda(i) = \lambda(c_{1j}) = w_j$,
- ansonsten wenn $i \neq c_{ij}$ für alle i, wir suchen den Zyklus $C_k$ von $p$, zu dem i gehört. Wir erhalten das erste Element $c_{1k}$ des Zyklus $C_k$, und $w_k$, und die ganze Zahl $n_k$ so, dass $w_k = p^n_k(c_{1k})$. Wir erhalten $\lambda(i) = p^n_k(i)$ durch die Berechnung der $p^n_k(i)$ . Diese Berechnung erfolgt durch Suchen im Zyklus $C_k$ nach der ganzen Zahl x, so dass $p^x(c_{1k}) = i$ .Wir berechnen dann r, das ist der Rest der Division $(n_k + x)/L_k$, $L_k$ ist die ganze Zahl, die die Länge des Zyklus $C_k$ darstellt, zu dem i gehört. Wir bekommen $p^n_k(i)$ : $p^n_k(i) = p^r(c_{1k})$, mit $r \equiv (n_k + x) \bmod L_k$.

**3.** Authentifizierungsverfahren unter Verwendung eines Challenge/Response-Protokolls. Dieses Protokoll ermöglicht es mehreren Personen, die als Authentifizierungsanforderer bezeichnet werden, sich bei einer einzigen Person zu athentifizieren , die als Prüfer bezeichnet wird, durch Berechnung des Wertes $Y = g(k, x)$ mit einem Geheimschlüssel $k$, und einem Berechnungsalgorithmus $g$, nach einem symmetrischen Kryptosystem berechnen. $k$ ist ein persönlicher geheimer Schlüssel , der jedem Authentifizierungsanforderer eigen ist. $x$ sind Daten, die der Prüfer dem Authentifizierungsanforderer zur Verfügung stellt, um der Challenge zu begegnen, $Y$ als Kryptogramm nach Anspruch 1 oder 2 zu berechnen.Wenn die Challenge gemeistert wird, beweist dies, dass der Authentifizierungsanforderer den geheimen Schlüssel $k$ hat, der ihn authentifiziert . Die Erfindung zeichnet sich aus durch : Einweg-Schlüssel wie $p^j$ oder $\lambda$ sind hier die persönlichen Geheimschlüssel, die für jeden Authentifizierungsanforderer spezifisch sind, und die öffentliche Information **In** in Form von ganzen Zahlen $j$ oder w-tuple $w$ ist der öffentliche Schlüssel jedes Authentifizierungsanforderers . Jeder Authentifizierungsanforderer erhält somit ein Paar "öffentlich-private" Schlüssel in der Form ($j$, $k = p^j$) oder ($w$, $k = \lambda$). Diese Schlüsselpaare werden vom Prüfer aus dem $p$-Mutterschlüssel , den er allein hält, hergestellt und dann vom Prüfer den Authentifizierungsanforderern zugeordnet. Diese Schlüsselpaare sind eindeutig, wenn **G** eine große Anzahl von Elementen enthält.Während der Überprüfung berechnet der Prüfer den persönlichen geheimen Schlüssel $k$ des Authentifizierungsanforderers unter Verwendung des öffentlichen Schlüssels $j$ oder $w$ des Authentifizierungsanforderers und mit dem Berechnungsverfahren $\{p^a\} \rightarrow p^j$ oder $\{p^a\} \rightarrow \lambda$. Er überprüft die Antwort auf die Challenge, ohne dass er den geheimen Schlüssel jedes Authentifizierungsanforderers speichern muss.

**4.** Authentifizierungsverfahren unter Verwendung eines Challenge/Response-Protokolls.In diesem Protokoll ist jeder Authentifizierungsanforderer mit einem Typschlüsselpaar ($j$, $k = p^j$) versehen, das von dem Prüfer nach Anspruch 1 und 3 hergestellt und zugewiesen wird. Die Erfindung zeichnet sich aus durch : Die Authentifizierung erfolgt durch Senden eines Daten $x$, das aus einer zufälligen ganzen Zahl h und einem beliebigen n-Tupel $N = (i_1,i_2,...,i_k,...,i_n)$ von Elementen von E besteht, an den Authentifizierungsantragsteller , das n-Tupel N kann auch konstant sein und aus den ersten Elementen jedes Zyklus von $p$ bestehen, N wird dann jedem Authentifizierungsanforderer zusätzlich zum Schlüsselpaar zugeordnet. Für den Authentifizierungsanforderer besteht die Challenge darin, für jedes $i_k$ von N berechnen $k^h(i_k)$, das heißt, den Wert der Bijektion $k^h$ für jedes $i_k$. Der Prüfer überprüft, ob die Challenge erfüllt ist, indem er $p^{j \times h}(i_k)$ für jede $i_k$ von N berechnet, nachdem er den öffentlichen Schlüssel **j** des Authentifizierungsanforderers gelesen hat. Diese Überprüfung erfolgt, ohne dass der Prüfer den privaten Schlüssel **k** jedes Authentifizierungsanforderers speichern muss und ohne dass der Schlüssel **k** des Authentifizierungsanforderers neu berechnet wird. Diese Berechnungen werden nach der Berechnungsmethode $\{p^a\} \rightarrow p^j$ durchgeführt.

**5.** Authentifizierungsverfahren unter Verwendung eines Challenge/Response-Protokolls. In diesem Protokoll ist jeder Authentifizierungsanforderer mit einem Typschlüsselpaar (**w**, **k** = λ) versehen, das von dem Prüfer nach Anspruch 2 und 3 hergestellt und zugewiesen wird. Die Erfindung zeichnet sich aus durch : Die Authentifizierung erfolgt, indem dem Authentifizierungsanforderer eine Daten **x** in Form einer Folge von Bits gesendet wird, die vom Prüfer an den Authentifizierungsanforderer übermittelt werden, damit er oder sie die Challenge bewältigen kann; der Schlüssel **k** jedes Anforderers ist eine Permutation von bitblöcken , die Anzahl der bitblöcken ist gleich der Anzahl der Bits in x. Die Berechnung **g,** die die Challenge darstellt, besteht darin, ein XOR zwischen den Bits jeder bitblöcken von **k** und jedem Bit von **x** anzuwenden, um einen ersten Wert **y** zu erhalten, und dann ein neues XOR auf die blocks von **y** mit fester Länge anzuwenden, um Y zu erhalten ; zum Beispiel, wenn **x** = 01011010 und **k** = (1111 01 101 111 111 00 10) ein erster Wert **y** aus den sechs Bits **001011** besteht und erhalten wird durch : (1+1+1+1) + 0 = **0,** (0 + 1) + 1 = **0,** (1 + 0 + 1) + 1 = **1,** etc , dann wird ein zweites XOR auf die blocks von **y** = 001011 angewendet, blocks , die hier ausgewählt sind, z.B. mit der Länge 3. In diesem Beispiel erhalten wir dann den Endwert **Y** = **10,** da 0 + 0 + 1 = 1 und 0 + 1 + 1 = **0.** Die Überprüfung erfolgt mit dem Algorithmus $\{p^a\} \rightarrow \lambda$, was es dem Prüfer erlaubt, den persönlichen geheimen Schlüssel **k** jedes Authentifizierungsanforderers nicht zu speichern oder neu zu berechnen, da der Prüfer durch diesen Algorithmus jedes bitblöcken von **k** erhält, indem er λ($e_j$) aus **w** und **p** berechnet, wobei $e_j$ ist das Rang-Element j von die geordneten Menge E.

**Claims**

**1.** The invention relates to a method of symmetric cryptography using a secret encryption key **K** which is a random finite sequence of symbols or which is a permutation of the symbols of an ordered set E , by which the sender of an encrypted message or data sends with cryptogram C an information called **In** in a public way, the public information **In** allowing to change the secret encryption key **K** for each message . This, in the aim to constitute a symmetric cryptosystem using disposable keys, the invention consisting of a device for manufacturing the key **K** and disposable keys, as defined below :

- first, the encryption key **K,** if in the form of a random finite sequence of symbols, is first designed and constructed in such a way that it is the concatenation of a permutation **p** of an ordered set E ,for example if **K** is a bit sequence such that **K** = 1010111 , **K** is cut so that it is a permutation of elements of a set E , permutation of blocks of bits , which can for example be defined here by the ordered set E = {11 101 10}; an algebraic group structure ($S_e$ , o) is constructed by this way in which the elements of E are blocks of symbols that make up **K** , $S_e$ is the symmetric group of E , which is the set of all permutations of E , these permutations being defined by the bijections from E to E associated with these permutations, and o is the function composition,
- secondly, the key **K** , called mother-key , which is in the form of a permutation **p** of blocks of symbols constructed as above, or in the form of a permutation **p** of symbols composing an ordered set E , is chosen so as to be composed of a large number of cycles whose lengths, defined by the number of elements of each cycle, do not have a common divisor : the set of the permutations $\{p^1, p^2,.., p^j,..,p^a\}$ is then a cyclic subgroup **G** of $S_e$, **a** is the least common multiple denoted LCM of the integers representing the lengths of the cycles , and $p^j$ is the bijection $p \; o \; p \; o.....o \; p$, i.e. the function composition iterated (j -1) times ,
- thirdly , for each message to be encrypted the message sender randomly chooses an integer **j.** This integer **j** is the information **In** communicated with cryptogram C to modify the mother-key **K** . The message sender , and the receiver when he receives the pair (C, **j**), then calculate their new encryption key **K'**. **K'** is the permutation $p^j$ belonging to the cyclic subgroup **G** of $S_e$ which is generated by **p**. **K'** can be concatenated if necessary. The calculation of **K'** is carried out by a function $f(\mathbf{j} , \mathbf{p})$ with $f$ the algorithm called $\{p^a\} \rightarrow p^j$, which one is defined by : for each element i belonging to E taken successively according to the order defined on E , calculate $p^j(i)$ by the following : if i is the first element of one of the cycles **C** of $p$, then $p^j(i) = p^r(i)$, with $r \equiv j \bmod L$ and L the length of the cycle **C** to which i belongs . Else look for the cycle $\mathbf{C}_k$ , whose first element is k in which i appears . By this way, we obtain the integer x such that $p^x(k) = i$ which is read in the cycle $\mathbf{C}_k$. Then calculate the remainder r of (j + x)/Lk , Lk being the length of cycle $\mathbf{C}_k$. We then obtain $p^j(i) = p^r(k)$, with $r \equiv (j + x) \bmod Lk$ .

**2.** The invention relates to a method of symmetric cryptography using a secret encryption key **K** which is a random finite sequence of symbols or which is a permutation of the symbols of an ordered set E , by which the sender of an encrypted message or data sends with cryptogram C an information called **In** in a public way, the public information **In** allowing to change the secret encryption key **K** for each message . This, in the aim to constitute a symmetric cryptosystem using disposable keys, the invention consisting of a device for manufacturing the key **K** and disposable keys, as defined below :

- first, the encryption key **K,** if in the form of a random finite sequence of symbols, is first designed and constructed in such a way that it is the concatenation of a permutation **p** of an ordered set E ,for example if **K** is a bit sequence such that **K** = 1010111, **K** is cut so that it is a permutation of elements of a set E , permutation of blocks of bits, which can for example be defined here by the ordered set E = {11 101 10}; an algebraic group structure $(S_e$ , o) is constructed in this way in which the elements of E are blocks of symbols that make up **K**, $S_e$ is the symmetric group of E , which is the set of all permutations of E , these permutations being defined by the bijections from E to E associated with these permutations, and o is the function composition,

- secondly, the key **K** , called mother-key , which is in the form of a permutation **p** of blocks of symbols constructed as above, or in the form of a permutation **p** of symbols composing an ordered set E , is chosen so as to be composed of a large number of cycles whose lengths, defined by the number of elements of each cycle, do not have a common divisor : the set of the permutations $\{p^1, p^2,.., p^j,..,p^a\}$ is then a cyclic subgroup **G** of $S_e$, a is the least common multiple denoted LCM of the integers representing the lengths of the cycles , and $p^j$ is the bijection p o p o....o p, i.e. the function composition iterated (j -1) times ,

- thirdly, by noting w the number of cycles of **p**, and **C₁, C₂, .....,Cw** the cycles of **p**, a w-tuple **w** of the cartesian product **C₁** x **C₂** x .....x **Cw** is randomly choosen by the message sender . This w-tuple w is the information **In** communicated with the cryptogram .

The message sender, and the receiver when he receives the couple (C, **In)**, then calculate their new encryption key **K'** . The calculation **of K'** is carried out by a function $f(w, p)$ with f the algorithm called $\{p^a\} \rightarrow \lambda$, which one is defined by :

Let $w = (w_1, w_2, ...w_j,.....w_w)$ be a w-tuple of **C₁** x **C₂** x...x **Cⱼ** x...... **Cw**. Let $c_{11}$ be the base element, i.e the first element, of cycle **C₁** , $c_{12}$ the first element of cycle **C₂** ,......,$c_{1j}$ the first element of cycle **Cⱼ,....,** $c_{1w}$ the first element of cycle **Cw.** Then the permutation $\lambda$, i.e the bijection $\lambda$ from E to E , belonging to **G** and associated with **w** is calculated by looking for the value $\lambda(i)$ for each i of E taken successively according to the order on E , this by the following way :

- if $i = c_{1j}$ for $1 \leq j \leq w$, i.e. if i is one of the base elements of the cycles of **p**, then $\lambda(i) = \lambda(c_{1j} = w_j$,
- else, if $i \neq c_{1j}$ for each j , look for the cycle $C_k$ of **p** to which i belongs. We then obtain the first element of cycle $C_k$ , $w_k$, and the integer $n_k$ such that $w_k = p^n{}_k(c_{1k})$. Then $\lambda(i) = p^n{}_k(i)$. And $p^n{}_k(i)$ is determined by : in cycle $C_k$ ,look for the integer x such that $p^x(c_{1k}) = i$. Then calculate the remainder r of the division $(n_k + x)/L_k$, $L_k$ being the length of cycle $C_k$ of i . Then: $p^n{}_k(i) = p^r(c_{1k})$, with $r \equiv (n_k + x)\mod L_k$.

3. The invention relates to a method of Challenge/response authentication process in which several people called authentication requesters , or requesters , authenticate to a single person called the verifier . This, by calculating a value **Y** = **g(k, x)** with a secret encryption key **k** which is personal to each requester and with an algorithm **g** , according a symmetric cryptosystem. **x** being data provided by the verifier to the requester to meet the challenge of calculating **Y** as a cryptogram according to claim 1 or 2 . If the challenge is met, this proves that the requester knows the secret key **k**, what performs the authentication.The invention consists of the following : disposable keys such as **pⱼ** or λ are here the personal secret keys specific to each requester and public information **In** , as an integer **j** or as w-tuple **w**, is its public key. In this way each requester has a pair of "public/private" keys, either in the form **(j , k = pⱼ)** or in the form **(w , k = λ)**. These pairs are manufactured and assigned to the requesters by the verifier from the mother-key **p** that he alone holds in secret. Theses key pairs are unique if **G** has a great cardinality . During the verification, the verifier recalculates the personal secret key **k** of the requester by using the public key **j** or **w** of the requester and with the calculation method $\{p^a\} \rightarrow p^j$ or $\{p^a\} \rightarrow \lambda$. He checks the answer to the challenge without it being necessary for him to store the secret key of each requester.

4. The invention relates to a method of Challenge/response authentication process in which each requester is equipped with a key pair of type **(j , k = pⱼ),** this pair being manufactured by the verifier according to claim 1 and 3. The invention consists of the following : authentication is carried out by sending the requester a data **x** which is composed of a random integer h and a n-tuple $(i_1, i_2,.., i_k,..., i_n)$ of elements of E , this n-tuple is denoted N . In a variant of the process N can be constant and composed of the first elements of each p cycle and be assigned to each requester as a complement to the key pair. The challenge then consists for the requester to calculate $k^h(i_k)$ for each $i_k$ of N , i.e the value of the bijection $k^h$ for each $i_k$. The verifier checks whether the challenge is met by calculating $p^{j \times h}(i_k)$ for each $i_k$ of N after haven read the public key **j** of the requester. This verification is performed without the verifier needing to store the private key $k$ of each requester and without this key $k$ being recalculated .These calculations being carried out by the calculation method $\{p^a\} \rightarrow p^j$.

5. The invention relates to a method of Challenge/response authentication process in which each requester is equipped with a key pair of type ($w$ , $k = \lambda$), this pair being manufactured by the verifier according to claim 2 and 3 . The invention consists of the following : authentication is carried out by sending the requester a data $x$ in the form of bits sequence sent by the verifier to the requester to meet the challenge , the key $k$ of each requester being a permutation of blocks of bits , the number of blocks of bits being the same as the bits number of $x$ . The challenge of calculating $g$ is to apply an XOR between the bits of each block of $k$ and each bit of $x$ to get a first value $y$ , then apply a new XOR to the blocks of bits, with fixed length , that make up $y$ to obtain $Y$. For example if $x$ = 010110 and $k$ = (1111 01 101 111 00 10) a first value $y$ consists of the six bits sequence **001011** which is calculated as follows : (1+1+1+1) + 0 = **0** , (0 + 1) + 1 = **0**, (1 + 0 + 1) + 1 = **1**, etc ; a second XOR is then applied to the blocks of bits that make up $y$ = **001011** , those blocks being choosen here , for example , of length 3.We therefore obtain , in this example , the final value $Y$ = **10** , since 0 + 0 + 1 = **1** and 0 + 1 + 1 = **0** . The verification is carried out by the $\{p^a\} \rightarrow \lambda$ algorithm which allows the verifier not to store or recalculate the personal secret key $k$ of each requester , since the verifier obtains by this algorithm each block of bits of $k$ by calculating $\lambda(e_j)$ from $w$ and $p$, ej being the element of rank j of the ordered set E .

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007136211 A

**Littérature non-brevet citée dans la description**

- **JACOB ALPERIN -SHERIFFF et al.** Faster Bootstrapping with Polynomial Error. *INTERNATIONAL ASSOCIATION FOR CRYPTOLOGIC RESEARCH,* 09 Février 2014, vol. 20140210 (134503), 1-17
- Les groupes finis et leurs représentation. Les théorèmes de Sylow; le groupe symétrique

- **JOSEPH A GALLIAN.** *The mathematics of identification numbers*
- **JURGEN MULLER.** Cryptography. Universitat Braunschweig WS, 2007, 94
- CRYPTOGRAPHY. Universitat Siegen WS, 2005, 94
- CRYPTOGRAPHY. Universitat Duisburg-Essen SS, 2004, 94